**Europäisches Patentamt**

**European Patent Office**

**Office européen des brevets**

(11) Veröffentlichungsnummer: **0 041 125**
**A1**

(12) # EUROPÄISCHE PATENTANMELDUNG

(21) Anmeldenummer: **81103082.4**

(22) Anmeldetag: **24.04.81**

(51) Int. Cl.³: **C 08 J 3/02**
**C 09 D 3/80, C 09 D 11/10**
**D 21 H 3/38, D 06 P 1/44**

(30) Priorität: **08.05.80 DE 3017543**

(43) Veröffentlichungstag der Anmeldung:
**09.12.81 Patentblatt 81/49**

(84) Benannte Vertragsstaaten:
**CH DE FR GB IT LI NL SE**

(71) Anmelder: **BAYER AG**
**Zentralbereich Patente, Marken und Lizenzen**
**D-5090 Leverkusen 1, Bayerwerk(DE)**

(72) Erfinder: **Schmidt, Adolf, Dr.**
**Roggendorfstrasse 67**
**D-5000 Köln 80(DE)**

(72) Erfinder: **Kolb, Günter, Dr.**
**Heinrich-von-Kleist-Strasse 7**
**D-5090 Leverkusen(DE)**

(72) Erfinder: **Clarenz, Werner, Dr.**
**Walter-Flex-Strasse 32**
**D-5090 Leverkusen 1(DE)**

(54) **Wässrige Dispersionen auf Basis von (Meth)Acrylsäurealkylester-Polymerisaten.**

(57) Die Erfindung betrifft wäßrige Dispersionen von (Meth)Acrylsäurealkylester-Einheiten enthaltenden Polymerisaten als Bindemittel, die das Polymerisat in Form von größeren, nicht-agglomerierten, kugelförmigen Teilchen ( = Hauptkugeln) und kleineren, nicht-agglomerierten, kugelförmigen Teilchen (=Füllkugeln) enthalten, wobei die kleineren Füllkugeln einen mittleren, elektronenmikroskopisch gemessenen Teilchendurchmesser $d_F$ von 50 bis 150 Nanometer (nm) besitzen, und der mittlere Durchmesser der großen Hauptkugeln, $d_H$, um den Faktor 1,35 bis 3,5 größer ist als der mittlere Teilchendurchmesser $d_F$, mindestens jedoch 140 nm beträgt, und wobei sich die Gesamtmasse des aus Hauptkugeln bestehenden Polymerisats, $M_H$, zur Gesamtmasse des aus Füllkugeln bestehenden Polymerisats, $M_F$, verhält wie

$$M_H : M_F = 20 : 1 \text{ bis } M_H : M_F = 1 : 20$$

und wobei mindestens 70% der Zahl der Hauptkugeln und mindestens 7 + % der Zahl der Füllkugeln im Bereich von ± 25 % des jeweils angegebenen Mittelwertes von $d_H$ oder von $d_F$ liegen.

Die Dispersionen trocknen auch bei einem Feststoffgehalt von 37 bis 45 Gew.-% zu klaren, glänzenden und wasserfesten Filmen auf, selbst dann, wenn die genannten Feststoffgehalte durch Verdünnen mit Wasser aus höher konzentrierten Dispersionen erhalten wurden. Sie werden als Imprägnier- oder Verfestigungsmittel für Papier, Gewebe und nicht-gewebte Textilien und Leder, als Binder für Anstrich- und Beschichtungsmittel sowie für Druckfarben eingesetzt.

EP 0 041 125 A1

Croydon Printing Company Ltd.

- 1 -

BAYER AKTIENGESELLSCHAFT  5090 Leverkusen, Bayerwerk
Zentralbereich  Fr/Rz
Patente, Marken und Lizenzen

**BEZEICHNUNG GEÄNDERT**
siehe Titelseite

Wäßrige Dispersionen auf Basis von (Meth)Acrylsäurealkylester-Polymerisaten mit zwei ausgeprägten, praktisch sich nicht überlappenden Maxima in der Teilchengrößenverteilung innerhalb spezieller Teilchengrößenbereiche, sowie Verfahren zu ihrer Herstellung und ihre Verwendung

Die Erfindung betrifft wäßrige Dispersionen von (Meth)Acrylsäurealkylester-Einheiten enthaltenden Polymerisaten verschiedener, aber bestimmter Teilchengrößen in bestimmten Massenverhältnissen, d.h., mit zwei ausgeprägten, praktisch sich nicht überlappenden Maxima in der Teilchengrößenverteilung innerhalb spezieller Teilchengrößenbereiche, sowie Verfahren zu ihrer Herstellung und ihre Verwendung.

Solche Dispersionen, wenn mit einem Feststoffgehalt von 50 Gew.-% und höher hergestellt, lassen sich auf 37 bis 45 Gew.-% Feststoffgehalt verdünnen und trocknen überraschenderweise auch bei letzteren Feststoffgehalten zu klaren, glänzenden und wasserfesten Filmen auf, während entsprechende, nahezu monodisperse Dispersionen, die jeweils nur eines der beiden Maxima bezüglich der Teilchengrößenverteilung besitzen, diese Eigenschaften nicht aufweisen.

Bekanntlich besteht ein grundsätzlicher Unterschied zwischen der Bildung eines Kunststoff-Filmes aus einem organischen Lösungsmittel und der Filmbildung aus

Le A 20 284 - E u r o p a

- 2 -

einer wäßrigen Dispersion (siehe Hans Reinhard in Chemie, Physik und Technologie der Kunststoffe in Einzeldarstellungen, Dispersionen synthetischer Hochpolymerer, Bd. 14, Teil II, Springer-Verlag Berlin, Heidelberg, New York (1969), Seiten 10 - 17).

Bei Dispersionen kann es bei der Filmbildung leicht zu Störungen kommen, deren Folgen mangelnder Glanz, rauhe Filmoberfläche und Filmtrübungen sind.

Die Bildung von hochglänzenden Latexfilmen mit einer glatten geschlossenen Oberfläche wird in der Regel angestrebt.

Erfahrungsgemäß führen nämlich Bindemittel, welche trüb auftrocknen, auch zu schlechter glänzenden pigmentierten Anstrichen als solche, welche glasklare, glänzende Filme bilden (vergl. H. Reinhard, wie oben zitiert, in "Dispersionen synthetischer Hochpolymerer, Teil II" (1969), Seite 52.).

Stand der Technik sind feinteilige, nahezu monodisperse, wäßrige Dispersionen auf Basis von Polymerisaten von (Meth)Acrylsäurealkylestern mit mittleren Dispersionsteilchendurchmessern von ca. 100 bis 150 Nanometer $\sqrt{nm}$ mit hoher Pigmentbindekraft. Solche Dispersionen sind auf einen Feststoffgehalt von etwa 50 Gew.-% eingestellt und besitzen im ammoniakalkalisch verdickten Zustand eine zähflüssig-pastöse Konsistenz. Sie trocknen in viskoser Form (ca. 50 Gew.-% Feststoffgehalt) zu klaren glänzenden Filmen auf. Der Glanz dieser pigmentierten Anstriche, insbesonders der auf Metallen, läßt aber vielfach noch zu wünschen übrig.

Die Filmbildung aus solchen, mit Wasser verdünnten Dispersionen erweist sich, insbesondere bei Feststoff-

Le A 20 284

- 3 -

gehalten von ca. 37 - 45 Gew.-%, als gestört. Aus solchen verdünnten Dispersionen gezogene Klarfilme besitzen eine rauhe, trübe Oberfläche, welche im Mikroskop zahlreiche Fehlstellen an der Filmoberfläche erkennen läßt.

Für viele Anwendungszwecke wird von einer filmbildenden Polymerdispersion eine niedrige Viskosität und damit eine nicht allzu hohe Feststoffkonzentration, eine ausgezeichnete Stabilität, und gleichzeitig noch eine hervorragende Klarfilmbeschaffenheit verlangt.

Nach H. Reinhard (in "Dispersionen synthetischer Hochpolymerer Teil II, Seite 3, wie oben zitiert) sind ferner grobteiligere wäßrige Dispersionen zur Herstellung von hochglänzenden Filmen weit weniger als feinteilige Dispersionen geeignet. Darüberhinaus hat sich gezeigt, daß die Wasserfestigkeit der Filme aus solchen grobteiligen Dispersionen schlechter ist als von Filmen feinteiliger Dispersionen.

Es ist schließlich Stand der Technik, daß zur Bildung einer geschlossenen, ebenen, und damit auch glänzenden Filmoberfläche aus wäßrigen Dispersionen die durchschnittliche Teilchengröße möglichst klein und außerdem die Teilchengrößenverteilung breit genug sein soll, so daß aus kleineren und größeren Teilchen eine möglichst dichte Kugelpackung entsteht (vergl. H. Reinhard, wie oben zitiert, in "Dispersionen synthetischer Hochpolymerer Teil II, Seite 3). Um eine hohe Kugelpackungsdichte in einer binären Zufallspackung zu erzielen, muß das Durchmesserverhältnis der Hauptkugeln zu den "Schlüpfkugeln" (= Füllkugeln) mindestens 6,5 zu 1 betragen (Pharm. Ind. 39 (1977), 11, Seite 1125).

<u>Le A 20 284</u>

- 4 -

Aufgabe der vorliegenden Erfindung war die Herstellung bei 37 - 45 Gew.-% Feststoffgehalt noch klar und glänzend auftrocknender wäßriger Polymerisatdispersionen. Die Klarfilme aus solchen Dispersionen sollten zudem eine ausgezeichnete Wasserfestigkeit besitzen und schnell auftrocknen.

Die Dispersionen sollten eine Auslaufzeit von weniger als 25 Sekunden im Auslaufbecher nach DIN 53 211 (4 mm Düse) bei ca. 22°C besitzen, somit leicht beweglich und selbstverständlich frei von Mikrokoagulat sein, welches bei der Verarbeitung durch Verstopfen von Düsen lästig werden kann.

Wünschenswert war ferner die Herstellung ca. 46-55 Gew.-% Feststoff enthaltender, filmbildender Dispersionen, welche sowohl in konzentrierter als auch in auf 37-45 Gew.-% Feststoffgehalt verdünnter Form zu klaren und glänzenden Filmen auftrocknen.

Die Aufgabe wurde dadurch gelöst, daß wäßrige Dispersionen von (Meth)Acrylsäurealkylester-Einheiten enthaltenden Polymerisaten bereitgestellt wurden, die das Polymerisat in Form von größeren, nicht-agglomerierten, kugelförmigen Teilchen (= Hauptkugeln) und kleineren, nicht-agglomerierten, kugelförmigen Teilchen (= Füllkugeln) enthalten, wobei die kleineren Füllkugeln einen mittleren, elektronenmikroskopisch gemessenen Teilchendurchmesser $\overline{d}_F$ von 50 -150 Nanometer (nm) besitzen, und der mittlere Durchmesser der großen Hauptkugeln, $\overline{d}_H$, um den Faktor 1,35 bis 3,5 größer ist als der mittlere Teilchendurchmesser $\overline{d}_F$, mindestens jedoch 140 nm beträgt, und wobei sich die Gesamtmasse des aus Hauptkugeln bestehenden Polymerisats, $M_H$, zur Gesamtmasse des aus Füllkugeln bestehenden Polymersisats, $M_F$, verhält wie:

$$\frac{M_H}{M_F} = 20 : 1 \quad \text{bis} \quad \frac{M_H}{M_F} = 1 : 20$$

<u>Le A 20 284</u>

- 5 -

und wobei mindestens 70 % der Zahl der Hauptkugeln und mindestens 70 % der Zahl der Füllkugeln im Bereich von $\pm$ 25 % des jeweils angegebenen Mittelwertes von $\bar{d}_H$ oder von $\bar{d}_F$ liegen.

Derartige Dispersionen trocknen auch bei einem Feststoffgehalt von 37-45 Gew.-% zu klaren, glänzenden und wasserfesten Filmen auf, selbst dann, wenn die genannten Feststoffgehalte durch Verdünnen mit Wasser aus höher konzentrierten Dispersionen erhalten wurden. Dies Ergebnis ist umso überraschender, als Dispersionen, die entweder das Polymerisat in Form der größeren Hauptkugeln oder der kleineren Füllkugeln enthalten, trübe, nicht-glänzende bzw. weniger glänzende Filme ergeben als erfindungsgemäße Dispersionen. Im Falle der grobteiligen Dispersionen werden außerdem Filme mit ungenügender Wasserfestigkeit erhalten. Das Ergebnis ist auch deshalb überraschend,weil es verschiedene Vorurteile zu überwinden galt, denn, wie bereits ausgeführt, soll zur Bildung einer geschlossenen, ebenen, und damit auch glänzenden Filmoberfläche aus Dispersionen die durchschnittliche Teilchengröße möglichst klein und die Teilchengrößenverteilung breit genug sein, so daß aus kleineren und größeren Teilchen eine möglichst dichte Kugelpackung entsteht, d.h., für das binäre System muß das Durchmesserverhältnis der größeren Hauptkugeln zu den kleineren Füllkugeln mindestens 6,5 zu 1 betragen.

Es war auch nicht zu erwarten, daß spezielle, keine dichteste Kugelpackung bildende Anordnungen von Dispersionsteilchen, bestehend aus Haupt- und Füllkugeln, besonders glänzende und gut geschlossene Filme bilden, wurde doch andererseits auch kleine Teilchengröße und Monodispersität als beste Voraussetzung für die Bildung besonders homogener Filme angesehen (vergl.O.L. Wheeler u.Mitarbeiter, Official Digest, Seite 1239, Dezember 1954). Auch sollen angeblich große eingestreute Latexteilchen die Filmbildung aus Emulsion erheblich stören (vergl. Houben Weyl Band XIV/1

Le A 20 284

Makromolekulare Stoffe, Teil 1, Georg Thieme Verlag 1961, Seite 532).

Gegenstand der Erfindung sind somit wäßrige Dispersionen, enthaltend als Bindemittel mindestens ein filmbildendes Polymerisat aus polymerisierten Einheiten von (Meth)Acrylsäurealkylestern mit 2 - 8 C-Atomen in der Alkoholkomponente oder mindestens ein filmbildendes Polymerisat aus copolymerisierten Einheiten von mindestens einem der vorgenannten (Meth)Acrylsäurealkylester und mindestens einem anderen Vinyl- oder Vinylidenmonomeren oder deren Mischungen, d a d u r c h  g e k e n n z e i c h n e t , daß die Dispersionen das Polymerisat in Form von größeren, nicht-agglomerierten, kugelförmigen Teilchen (= Hauptkugeln) und kleineren, nicht-agglomerierten kugelförmigen Teilchen (= Füllkugeln) enthalten, wobei die kleineren Füllkugeln einen mittleren, elektronenmikroskopisch gemessenen Teilchendurchmesser $\overline{d_F}$ von

50 bis 150, vorzugsweise 80 bis 130 Nanometer (nm) besitzen, und der mittlere Durchmesser der großen Hauptkugeln, $\overline{d_H}$, um den Faktor 1,35 bis 3,5, vorzugsweise 1,8 bis 3,5 größer als der mittlere Teilchendurchmesser $\overline{d_F}$ ist, mindestens jedoch 140 nm beträgt, und wobei sich die Gesamtmasse des aus Hauptkugeln bestehenden Polymerisats, $M_H$, zur Gesamtmasse des aus Füllkugeln bestehenden Polymerisats, $M_F$, verhält wie

$$\frac{M_H}{M_F} = 20 : 1 \quad \text{bis} \quad \frac{M_H}{M_F} = 1 : 20$$

vorzugsweise 1 :10 bis 2 : 1, und wobei mindestens 70 % der Zahl der Hauptkugeln und mindestens 70 % der Zahl der Füllkugeln im Bereich von ± 25 % des jeweils angegebenen Mittelwertes von $\overline{d_H}$ oder von $\overline{d_F}$ liegen, und daß für den Fall, daß die Dispersion mehrere gleiche oder unterschiedliche Polymerisate enthält, diese miteinander verträglich sind.

Le A 20 284

Die Polymerisate sind dann im Sinne der vorliegenden Erfindung miteinander verträglich, wenn aus den Polymerisaten hergestellte, ca. 0,25 cm dicke Platten klar und durchsichtig sind. Das Herstellen der Platten kann durch Homogenisieren der Polymerisate auf Walzen und Verpressen erfolgen.

Als (Meth)Acrylsäurealkylester mit 2 bis 8 C-Atomen seien namentlich genannt: Ethylacrylat, Propylacrylat, Butylacrylat, 2-Ethylhexylacrylat, und die entsprechenden Methacrylsäureester. Bevorzugt sind Ethylacrylat, n-Butylacrylat und 2-Ethylhexylacrylat, insbesondere n-Butylacrylat.

Unter Vinyl- und Vinylidenmonomeren werden verstanden:

I. Aromatische Vinyl- und Vinylidenverbindungen, beispielsweise Styrol, α-Methylstyrol, α-Methyl-p-isopropylstyrol, α-Methyl-m-isopropylstyrol, o-, p-Chlorstyrol, o-, p-Bromstyrol, kernsubstituiertes Methylstyrol, p-tert.-Butylstyrol oder deren Mischungen; bevorzugt ist Styrol.

II. Acrylsäure, Methacrylsäure, Maleinsäurehalbester mit 1-8 C-Atomen in der Alkoholkomponente. Bevorzugt sind Methacrylsäure und/oder Acrylsäure, insbesondere Methacrylsäure.

III. N-Alkoximethyl-methacrylamid, N-Alkoximethyl-acrylamid, jeweils mit 1-4 C-Atomen in der Alkoxigruppe; bevorzugt sind die vorgenannten Methacrylamidderivate, insbesondere N-Methoximethyl-methacrylamid.

Le A 20 284

- 8 -

IV. Vinylester organischer Monocarbonsäuren, wobei die Säurekomponente 2-4 C-Atome enthält, wie Vinylacetat und Vinylpropionat.

V. Monoolefinisch ungesättigte Halogenkohlenwasserstoffe, wie Vinylchlorid oder Vinylidenchlorid.

Bevorzugte Copolymerisate sind aus n-Butylacrylat, Styrol, Acryl- und/oder Methacrylsäure und gegebenenfalls aus N-Methoximethylmethacrylamid aufgebaut.

Besonders bevorzugte Copolymerisate bestehen aus copolymerisierten Einheiten von

48 bis 60 Gew.-% n-Butylacrylat,
35 bis 48 Gew.-% Styrol,
 4 bis  6 Gew.-% Methacrylsäure oder Acrylsäure oder deren Mischungen, und
 0 bis 13,0 Gew.-% N-Methoximethyl-methacrylamid, vorzugsweise 0 bis 3,5 Gew.-%,

die Summe der Gewichtsprozente beträgt 100.

Die mittleren Teilchendurchmesser der "Füllkugeln" sind erfindungsgemäß stets verschieden von den mittleren Teilchendurchmessern der größeren "Hauptkugeln".

Die Bezeichnung "mittlere Teilchendurchmesser" wird gewählt, um klarzustellen, daß nicht alle Füllkugeln und alle Hauptkugeln einen jeweils gleichen Durchmesser besitzen. Vielmehr liegt für Füllkugeln und Hauptkugeln jeweils eine Verteilung um den mittleren Teilchendurchmesser $\overline{d}_F$ oder $\overline{d}_H$ vor. Als mittlerer Teilchendurchmesser ist jener, innerhalb der Meßgenauigkeit des jeweiligen Meßverfahrens liegende Teilchendurchmesserbereich

Le A 20 284

- 9 -

definiert, welchem der zahlenmäßig größte Anteil der Teilchen zuzuordnen ist.

In Tabelle I und Tabelle II sind Verteilungen angeführt, wie sie für Füllkugeln und Hauptkugeln bei den erfindungsgemäßen Dispersionen charakteristisch sind.

Diese Verteilungen wurden anhand von elektronenmikroskopischen Aufnahmen von Dispersionsteilchen bestimmt. Die Durchmesser der nach geeigneter Präparationsmethode (Negativkontrastverfahren) fotografierten Dispersionsteilchen wurden ausgemessen und mit der Zahl der ausgemessenen Teilchen korreliert.

Die in Tabelle I und II gezeigten Verteilungen sind beispielhaft. Es können etwas engere und etwas breitere Verteilungen vorliegen. Die Breite dieser Verteilungen ist verfahrensbedingt und hängt beispielsweise von der Rührgeschwindigkeit ab. Ferner kann das Maximum der Verteilungskurven nach größeren oder kleineren mittleren Teilchendurchmessern verschoben sein. Überlappungen in den Verteilungskurven sind beim Übergang von großen Füllkugeln zu kleinen Hauptkugeln möglich. Besonders vorteilhafte erfindungsgemäße Systeme bestehen aber aus deutlich unterscheidbaren Füllkugeln und Hauptkugeln mit sich im wesentlichen nicht überlappenden Verteilungskurven.

Le A 20 284

Tabelle I

Typische Latexteilchendurchmesserverteilung
einer Dispersion $A_F$ (Dispersion mit Füllkugeln
gemäß Beispiel 1)

| Zahl der Teilchen | Anzahl in % | Teilchendurchmesserbereich ( Nanometer ( nm ) ) |
|---|---|---|
| 2 | 1 | 60 - 70 |
| 12 | 6 | 70 - 80 |
| 44 | 22 | 80 - 90 |
| 70 | 35 | 90 - 100 |
| 46 | 23 | 100 - 110 |
| 24 | 12 | 110 - 120 |
| 2 | 1 | 120 - 130 |
| insgesamt 200 Teilchen im Durchmesser gemessen | 100 % | |

Erläuterung zu Tabelle I:

2 von 200 Teilchen (d.h., 1 % zahlenmäßiger Anteil)
besitzen einen Teilchendurchmesser im Bereich von
60 bis 70 Nanometer; 12 von 200 Teilchen (d.h., 6 %)
einen Teilchendurchmesser im Bereich von 70 bis 80
Nanometer usw.

Die Dispersionsteilchen erscheinen kompakt aufgebaut
und sind kugelförmig und nicht agglomeriert.

Le A 20 284

- 11 -

Tabelle II

Typische Latexteilchendurchmesserverteilung
einer Dispersion $B_H$ (Dispersion mit Hauptkugeln
gemäß Beispiel 1)

| Zahl der Teilchen | Anzahl in % | Teilchendurchmesserbereich ( Nanometer (nm) ) |
|---|---|---|
| 4 | 2 | 150 - 160 |
| 30 | 15 | 160 - 170 |
| 100 | 50 | 170 - 180 |
| 60 | 30 | 180 - 190 |
| 6 | 3 | 190 - 200 |
| insgesamt 200 Teilchen im Durchmesser gemessen | 100 % | |

Erläuterung zu Tabelle II:

4 von 200 Teilchen (d.h., 2 % zahlenmäßiger Anteil)
besitzen einen Teilchendurchmesser im Bereich von
150 bis 160 Nanometer; 30 von 200 Teilchen (d.h., 15 %)
einen Teilchendurchmesser im Bereich von 160 - 170 nm,
usw.

Die Dispersionsteilchen erscheinen kompakt aufgebaut
und sind kugelförmig und nicht agglomeriert.

Le A 20 284

- 12 -

Die Herstellung der beanspruchten Dispersionen kann am einfachsten durch Vermischen einer Dispersion $A_F$ mit Füllkugeln und einer Dispersion $B_H$ mit Hauptkugeln erfolgen, worauf im einzelnen noch eingegangen wird.

Es ist überraschend, daß, ausgehend von einem Teilchendurchmesserbereich von $\overline{d}_F$ von 50 bis 150 nm, bei Durchmesserverhältnissen $\overline{d}_H/\overline{d}_F$ = 1,35 - 3,5, mit der Einschränkung, daß $\overline{d}_H$ mindestens 140 nm betragen muß, eine ganz entscheidende Glanzverbesserung gegenüber jenen Dispersionen erzielt werden kann, welche lediglich aus Latexteilchen mit den Durchmessern $\overline{d}_H$ oder $\overline{d}_F$ bestehen. Eine möglichst dichte Kugelpackung kann sich bei solchen Durchmesserverhältnissen, bei ungeordneter Verteilung der Kugeln, nämlich gar nicht bilden. Der Volumenschrumpf, der sich z.B. beim Mischen gleicher Volumina statistischer Packungen von Glaskugeln des Durchmessers 1 cm und 0,5 cm feststellen läßt, ist als minimal zu bezeichnen. Er ist zudem noch von der jeweiligen zufälligen Anordnung der Kugeln abhängig und nicht exakt für den Einzelfall angebbar.

Glanzverbesserungen waren allenfalls zu erwarten, wenn ein Schlupf der kleinen Kugeln in die durch die Hauptkugeln gebildeten Hohlräume in weit größerem Umfange möglich ist.

Beim Zumischen eines geringfügigen Teils einer grobteiligen, nahezu monodispersen Dispersion $B_H$ zu einer feinteiligen, nahezu monodispersen Dispersion $A_F$ entsteht innerhalb der beanspruchten Teilchengrößen $\overline{d}_H$ und $\overline{d}_F$ und der Masseverhältnisse $M_H$ zu $M_F$ bereits eine beanspruchte Dispersion, die bezüglich Glanz und Filmglätte den Ausgangsdispersionen $B_H$ und $A_F$ überlegen ist, und wobei die gute Wasserfestigkeit der Klarfilme der fein-

Le A 20 284

- 13 -

dispersen, nahezu monodispersen Ausgangsdispersion $A_F$ erhalten bleibt. Es sei nochmals betont, daß diese Filmeigenschaften auch mit Dispersionen erreicht werden sollen, die einen Feststoffgehalt innerhalb von 37 bis 45 Gew.-% besitzen, da bei einem Feststoffgehalt von höher als 45 Gew.-% das Erreichen der gewünschten Filmeigenschaften weniger problematisch ist, d.h., sie werden auch mit feinteiligen, monodispersen, praktisch nur ein Maximum in der Teilchengrößenverteilung aufweisenden Dispersionen erreicht. Wie die Vergleiche in den Beispielen dieser Anmeldung zeigen, können handelsübliche, feinteilige, nahezu monodisperse Dispersionen auf Basis von Acrylatpolymerisaten, die den abgehandelten Dispersionen $A_F$ entsprechen können und meistens Feststoffgehalte über 45 Gew.-% besitzen, und die nach Verdünnen mit Wasser auf Verarbeitungsviskositäten die gewünschten Filmeigenschaften bezüglich Glanz und Filmglätte nicht liefern, durch Zugabe von grobteiligen Dispersionen $B_H$ wesentlich verbessert werden.

Die beanspruchten Teilchendurchmesserbereiche $\bar{d}_F$ und $\bar{d}_H$ der Füllkugeln und Hauptkugeln sind kritische Parameter für die Bildung klarer, glänzender und gleichzeitig wasserfester Klarfilme aus den Dispersionen. Die erfindungsgemäßen Dispersionen besitzen stets zwei ausgeprägte Maxima in der Teilchengrößenverteilung.

Ist das Durchmesserverhältnis in den erfindungsgemäßen Dispersionen kleiner als 1,35, so trocknen die Filme nicht wesentlich klarer und glänzender auf als Dispersionen, die nur die kleineren oder nur die größeren grobteiligen, kugelförmigen Teilchen enthalten. Bei einem Durchmesserverhältnis größer als 3,5 verschlech-

Le A 20 284

- 14 -

tert sich die Wasserfestigkeit der aus solchen Dispersionen hergestellten Filme.

Auch das Verhältnis der Gesamtmassen von Hauptkugeln
und Füllkugeln $M_H/M_F$ ist kritisch, denn auch bei Einstellung der erfindungsgemäßen Teilchendurchmesserbereiche wird kein erwünschter Effekt erzielt, wenn die
beanspruchten Massenverhältnisse nicht eingehalten werden, insbesondere, wenn der Anteil $M_F$ zu gering ist.
Im Falle der Herstellung erfindungsgemäßer Dispersionen
durch Abmischen ist es im allgemeinen leichter, einer
nicht-glänzend auftrocknenden, grobdisperseren Dispersion
$B_H$ (z.B. ca. 200 nm) durch Zusatz geringer Mengen einer
feinteiligen Dispersion $A_F$ zur Bildung glänzender Filme
zu verhelfen als ein trüb auftrocknendes, feindisperses System durch Zusatz grobteiliger Partikel zur Bildung glänzender Filme zu bringen.

Bevorzugte Abmischungen besitzen Verhältnisse

$$M_F/M_H \;=\; 10 : 1 \;\; \text{bis} \;\; M_F/M_H \;=\; 1 : 2.$$

Die Masse der Füllkugeln überwiegt meist in erfindungsgemäßen, bevorzugten Systemen. Sie überwiegt insbesondere, um eine möglichst rasche Bildung wasserfester
Filme zu ermöglichen.

Le A 20 284

- 15 -

Zusätze geringer gewichtsmäßiger Anteile von Füllkugeln zu Hauptkugeln führen     ebenfalls zur Verbesserung des Glanzes von Latexfilmen.  Solche Latexfilme lassen aber meist in ihrer Wasserfestigkeit und Trocknungsgeschwindigkeit zu wünschen übrig.  Es bedarf dann der forcierten Trocknung bei erhöhter Temperatur, um solche zunächst meist noch redispergierbaren Filme ausreichend wasserfest zu machen.

Bei bestimmten Anwendungen wird ein solches Verhalten von Dispersionen aber gefordert.  Beispielsweise sollen Dispersionen für den Textildruck bei Zimmertemperaturen gut redispergierbare Filme bilden, welche beim Nacherhitzen bei erhöhter Temperatur aber gut verfilmen und gegebenenfalls noch vernetzen.

Mit erfindungsgemäßen Dispersionen läßt sich stets ein gewünschter Kompromiß zwischen Echtheit und Redispergierbarkeit erreichen.

Der mittlere Teilchendurchmesser der Füllkugeln liegt bei den erfindungsgemäßen Dispersionen im Bereich von 50 bis 150 nm, vorzugsweise im Bereich von 80 bis 130 nm. Werden feinerdisperse Dispersionen verwendet, so muß zu deren Stabilisierung entweder sehr viel Emulgator verwendet werden, oder es müssen hohe Anteile hydrophiler Gruppen in die Polymerisate eingebaut werden.  Von den erfindungsgemäßen Dispersionen wurde aber eine möglichst hohe Wasserfestigkeit bei gleichzeitig guter Stabilität verlangt.

Wird andererseits die obere Grenze von 150 nm für die Füllkugeln überschritten, so lassen sich zwar diese Dispersionen mit geringerem Emulgatoraufwand stabilisieren,

Le A 20 284

- 16 -

das Zusammenfließen der Teilchen wird aber infolge der geringeren inneren Oberfläche dieser Dispersionen zunehmend erschwert. Die Wasserfestigkeit solcher Filme ist dann trotz geringerer Emulgatoranteile ebenfalls unbefriedigend, wenn die Filmbildung nicht durch erhöhte Temperatur erzwungen wird.

Die erfindungsgemäßen Dispersionen, die Feststoffgehalte von ca. 37 bis 55 Gew.-% aufweisen können und auch bei Feststoffgehalten von 37 bis 45 Gew.-% zu glänzenden, klaren, wasserfesten Filmen auftrocknen sollen, werden, wie bereits erwähnt, am einfachsten durch Abmischen zweier Stammdispersionen $A_F$ und $B_H$ und Zusatz von 0,5 bis 3 Gew.-%, bezogen auf Polymerisat, an nichtionischem Emulgator als Stabilisator hergestellt. Der Zusatz des nichtionischen Emulgators kann auch vor dem Abmischen zur jeweiligen Stammdispersion erfolgen. $A_F$ und $B_H$ können gleichen oder verschiedenen Feststoffgehalt besitzen. Hierbei enthält $A_F$ die kleineren Füllkugeln und $B_H$ die größeren Hauptkugeln.

$A_F$ kann nach an sich bekannten Verfahren der Emulsionspolymerisation hergestellt werden. Bevorzugt werden diskontinuierliche oder halbkontinuierliche Verfahren, bei welchen die Zahl der Latexteilchen und damit auch die Latexteilchengröße nach einer aus J. chem. Physics 16, 592 (1948) angegebenen Korrelation über die Emulgator- und auch die Initiatorkonzentration im Bereich von 50 bis 150 nm geregelt werden kann.

Zur Herstellung der gröberdispersen Dispersion $B_H$ kann die Dispersion $A_F$ als Saatlatex vorgelegt und durch Aufpolymerisieren auf die vorhandenen

Le A 20 284

- 17 -

Latexkeime gezielt vergröbert werden (zum Keimlatexverfahren: Houben Weyl, Methoden der Organischen Chemie,
Band XIV/1 (1961), S. 399 ff.). Dieses Verfahren
empfiehlt sich insbesondere zur Einstellung von Dispersionsteilchendurchmessern größer als 150 nm. Die Einstellung der Latexteilchen im Bereich von 50 bis 150 nm
kann über Emulgator- und Initiatorkonzentration erfolgen.

Neben der Möglichkeit, die Teilchengröße über Emulgator-
und Initiatorkonzentration zu steuern, kann auch über
die Auswahl der Emulgatoren zur Teilchengrößenregulierung beigetragen werden.

Zur Herstellung besonders feindisperser Latices werden
anionische Emulgatoren verwendet, beispielsweise Natriumlaurylsulfat, Sulfate von Fettalkoholgemischen mit 12
bis 18 Kohlenstoffatomen, p-Dodecylbenzolsulfonate, sec.
Paraffinsulfonate, wie sie durch Behandeln von Paraffinmonosulfonsäurechloriden mit Natronlauge entstehen.

Zur Herstellung etwas grobteiligerer Latices im Bereich
von 100 bis 150 nm können Sulfobernsteinsäureester,
namentlich Sulfobernsteinsäuredioctylester, Sulfate
oxethylierter Fettalkohole mit 3 bis 15 Mol Ethylenoxid pro Mol Fettalkohol, Sulfate mit 3 bis 15 Mol
Ethylenoxid umgesetzter Alkylphenole verwendet werden.

Vorzugsweise werden handelsübliche Natriumalkansulfonate,
hergestellt durch Sulfochlorierung von n-Paraffinen mit
12 bis 18 C-Atomen und anschließender Verseifung mit
Natronlauge (vergl. Chemie und Technologie der Paraffinkohlenwasserstoffe, Akademie Verlag Berlin, 1956, Seiten

Le A 20 284

395 - 474), sowie Ammoniumsulfate eines mit 3 und eines mit 10 Mol Ethylenoxid kondensierten technischen Laurylalkohols zur Herstellung der Dispersionen vom Typ $A_F$ in Mengen von 0,5 bis 1,5 Gew.-%, bezogen auf Polymerisat, eingesetzt.

Zur Herstellung von Dispersionen vom Typ $B_H$ mit Dispersionsteilchendurchmessern im Bereich von 150 bis 450 nm haben sich als Emulgatoren speziell Alkanpolysulfonate gut bewährt. Die Herstellung derartiger Emulgatoren wird anschließend beschreiben. Sie werden in Mengen von 0,5 bis 1,5 Gew.-%, bezogen auf Polymerisat, eingesetzt. Zur Stabilisierung gegen Elektrolytzusätze werden den mit Hilfe anionischer Emulgatoren hergestellten Dispersionen $B_H$ und $A_F$ nach ihrer Einstellung auf pH = 7 bis 9 mit wäßriger Ammoniaklösung nicht-ionogene Emulgatoren in Mengen von 0,5 bis 3 Gew.-%, bezogen auf Polymerisat, zugesetzt. Der Zusatz nicht-ionogener Emulgatoren erfolgt vorzugsweise erst nach beendeter Polymerisation und erst nach Zugabe von Ammoniak zum auspolymerisierten Rohlatex.

Geeignete nicht-ionogene Emulgatoren enthalten 10 bis 70 Ethylenoxideinheiten pro Molekül. Es können Kondensationsprodukte des Ethylenoxids mit Fettalkoholen, Fettsäuren, Harzsäuren und Phenolen oder deren Mischungen verwendet werden.

Die Herstellung der erfindungsgemäßen Dispersionen kann auch durch direkte Polymerisation in einem Zweistufenverfahren erfolgen, wie aus Beispiel 6 ersichtlich ist.

Le A 20 284

- 19 -

Andere, weniger bevorzugte, weil schlechter reproduzierbare Verfahren zur Herstellung von Dispersionen, welche
neben einer überwiegenden Menge kleinerer Füllkugeln einen
mehr oder weniger breit verteilten Anteil größerer Partikel
enthalten, bestehen beispielsweise in der Polymerisation
in Gegenwart kritischer Mengen von Ammoniak, in der Polymerisation in Gegenwart unzureichender Emulgatormengen,
im Nachsatz von Elektrolyten zu einer monodispersen Dispersion oder in deren partieller Agglomeration durch Druck
oder Hitzeinwirkung. Auch durch solche Maßnahmen kann nach
der Lehre der vorliegenden Erfindung eine Verbesserung im
Glanz der Filme erzielt werden.

Bevorzugt werden aber erfindungsgemäß glänzende und wasserfeste Filme bildende Dispersionen durch Abmischen von
Stammdispersionen $A_F$ und $B_H$ mit jeweils engen Durchmesserverteilungen hergestellt.

Die erfindungsgemäßen Dispersionen können für die Herstellung von Anstrichmitteln oder als Anstrich- und Beschichtungsmittel für Papier, Kunststoffe, Holz, Leder,
keramische Materialien, Glas, Metalle, als Imprägnier-
und Verfestigungsmittel für Papier und Kartonagen, Leder
und textile Gebilde, oder als Bindemittel im Pigmentdruck, und für Straßenmarkierungen eingesetzt werden.

Die angegebenen Prozente und Teile beziehen sich, soweit
nicht bereits angegeben, auf das Gewicht.

Le A 20 284

- 20 -

EXPERIMENTELLER TEIL

1. Erläuterungen

1.1 Ausgangsstoffe (Emulgatoren)

Bei dem in den nachfolgenden Beispielen 1 und 2 erwähnten Alkalialkanmonosulfonat-Emulgator handelt es sich um ein handelsübliches $C_{12}$-$C_{18}$-Alkansulfonatgemisch (Natriumsalze), welches vorwiegend aus Monosulfonaten besteht und nur geringe Anteile an Di- und Polysulfonaten (unter 10 %) enthält.

Zur Herstellung des in dem Beispiel 5 der vorliegenden Anmeldung eingesetzten "Fettalkohol-Ethylenoxid-Ammoniumsulfats" wird handelsüblicher Laurylalkohol in technischer Reinheit, ein Fettalkoholgemisch aus ca. 48 - 58 % Dodecylalkohol, 19 - 24 % Tetradecylalkohol, 9 - 12 % Hexadecylalkohol, und 10 - 13 % Octadecylalkohol verwendet. Ein Mol dieses Laurylalkohols wird unter alkalischer Katalyse bei 130 bis 140°C mit 10 Mol Ethylenoxid umgesetzt. Dieses Polyglykolether-Vorprodukt wird durch Reaktion mit 1,0 Mol Chlorsulfonsäure·in üblicher Weise in den Schwefelsäureester übergeführt, welcher nach Neutralisation mit wäßrigem Ammoniak das entsprechende Ammoniumsalz ergibt. Die in dem Beispiel angegebenen Emulgatormengen beziehen sich auf 100 % waschaktive Substanz (100 % WAS). Entsprechend werden Emulgatoren mit 3 und 15 Mol Ethylenoxid hergestellt.

Die Herstellung eines geeigneten "polysulfonathaltigen Emulgatorsystems", welches gewünschtenfalls mit üblichen Emulgatoren kombiniert werden kann, ist nachfolgend beschrieben:

Le A 20 284

- 21 -

1.1.1 Emulgatorsystem, enthaltend ca. 70 Gew.-% Natrium-alkanpolysulfonat

Ein Gemisch linearer Alkane (8 bis 20 Kohlenstoffatome im Molekül, mittlere Zahl der Kohlenstoffatome ist 15) wird in Gegenwart von Licht mit einem Gasgemisch, bestehend aus 1,1 Gew.-Tln Schwefeldioxid und 1,0 Gew.-Tl Chlor bei einer Temperatur von 30 bis 40°C unter Rühren und gleich-zeitigem Kühlen sulfochloriert. Die Sulfochlorie-rung wird so lange durchgeführt, bis das Reaktionsgemisch eine Dichte von 1,165 $g/cm^3$ bei 45°C hat. Der Sulfochlorgehalt ist dann bei 15,5 bis 16,0 Gew.-%.

200 g des Sulfierungsgemisches werden tropfenweise zu 144 g 50 gew.-%iger Natronlauge gegeben, die auf 50 bis 60°C erwärmt wurde. Durch Kühlen wird das Reaktionsgemisch auf eine Temperatur von 95 bis 100°C gehalten. Nach Beendigung der Umsetzung wird das Reaktionsgemisch durch Zugabe von konzentrierter Natronlauge auf einen pH-Wert von 9 bis 10 eingestellt. Anschließend kühlt man das Reaktionsgemisch auf 60 bis 70°C ab.

In diesem Temperaturbereich fällt Natriumchlorid aus, das abfiltriert oder abzentrifugiert wird. Die natriumchloridarme Lösung wird im Vakuum zur Trockne eingedampft. Man erhält hierbei 220 g Natriumalkansulfonat. Das Natriumalkansulfonat besteht aus:

28 Gew.-% Natrium-alkan-monosulfonat
67 Gew.-% Natrium-alkan-polysulfonat.

Der Rest, ca. 5 %, sind Wasser und etwas Kochsalz.

Le A 20 284

Das so hergestellte Natriumalkansulfonat wird als Emulgator allein oder unter Zusatz von Natrium-alkan-monosulfonat oder anderer, an sich bekannter anionischer und/oder nicht-ionogener Tenside zur Polymerisation von Monomeren in Emulsion verwendet.

1.1.2 Herstellung eines Emulgatorsystems, enthaltend ca. 90 Gew.-% Natriumalkanpolysulfonat

Ein Gemisch linearer Alkane (8 bis 20 Kohlenstoffatome im Molekül, mittlere Zahl der Kohlenstoffatome ist 15) wird in Gegenwart von Licht mit einem Gasgemisch, bestehend aus 1,1 Gew.-Tl Schwefeldioxid und 1,0 Gew.-Tl Chlor bei einer Temperatur von 30 bis 40°C unter Rühren und gleichzeitigem Kühlen sulfochloriert. Die Sulfochlorierung wird so lange durchgeführt, bis das Reaktionsgemisch eine Dichte von 1,250 g/cm$^3$ bei 45°C hat. Der Sulfochlorgehalt ist dann bei 18,0 - 18,5 Gew.-%.

200 g des Sulfierungsgemisches werden tropfenweise zu 170 g 50 gew.-%iger Natronlauge gegeben, die auf 50 bis 60°C erwärmt wurde. Durch Kühlen wird das Reaktionsgemisch auf eine Temperatur von 95 bis 100°C gehalten. Nach Beendigung der Umsetzung wird das Reaktionsgemisch durch Zugabe von konzentrierter Natronlauge auf einen pH-Wert von 9 bis 10 eingestellt. Anschließend kühlt man das Reaktionsgemisch auf 60 bis 70°C ab.

In diesem Temperaturbereich fällt Natriumchlorid aus, das abfiltriert oder abzentrifugiert wird. Die Natriumchlorid-arme Lösung wird im Vakuum zur Trockne eingedampft. Man erhält hierbei ein Ge-

Le A 20 284

- 23 -

misch aus 8 g NaCl und 139 g Natriumalkansulfonat.
Das Natriumalkansulfonat besteht aus:

13,2 Gew.-% Natriumalkan-monosulfonat
86,8 Gew.-% Natriumalkan-polysulfonat.

Da so erhaltene Natriumalkansulfonat wird als
Emulgator allein oder unter Zusatz von Natrium-
alkan-monosulfonat oder anderer an sich bekannter
anionischer und/oder nicht-ionogener Tenside zur
Polymerisation von Monomeren in Emulsion verwendet.

1.2   Polymerisationsapparatur

Die Emulsionspolymerisation wurde im Labor in einem
Fünfhalskolben aus Jenaer Glas mit motorgetriebenem
KPG-Rührwerk nach Weygand (vergl. C. Weygand, Chem.
Techn. 16, 64, 1943) mit zwei um 90° gegeneinander
versetzten, durch Zentrifugalkraft spreizbaren Flügeln (Rührblätter 5 x 2 cm), Stickstoffzuleitung,
Rückflußkühler mit aufgesetztem Gasblasenzähler,
Innenthermometer bzw. Thermofühlerhülse und Anschlüssen für die Zuleitungen der zuzupumpenden Lösungen
bzw. Monomerengemische unter Ausschluß von Luftsauerstoff durchgeführt.

Obwohl die Rührgeschwindigkeit in weiten Grenzen unkritisch ist, muß Schaumbildung durch zu heftiges
Turburieren vermieden werden, wie andererseits zu
langsames Rühren eine erhöhte Ausfall- und Stippenbildung und einen verringerten Monomerenumsatz begünstigt. Es konnten Blatt-, Anker- und Kreuzbalkenrührer eingesetzt werden.

Le A 20 284

- 24 -

Im 4-Ltr.-Maßstab wählte man Rührgeschwindigkeiten von ca. 250 UpM (Umdrehungen pro Min.), im 40-Ltr.-Autoklav 120 UpM, im 250-Ltr.-Rührkessel 80 UpM, im 10.000-Ltr.-Autoklav 35 - 45 UpM.

Die Innentemperatur, gemessen im Latex, wurde in allen Fällen über elektronische Temperaturregler auf etwa ± 0,3°C konstant gehalten.

1.3 Beurteilung der Dispersionen und daraus hergestellter Klarfilme

Zur Feststoffgehaltsbestimmung (in Gew.-%) wurden Latexproben in Stanniolschälchen 30 Min. im Umluftschrank bei 180 bis 200°C getrocknet. Die auf diese Weise ermittelten Werte stimmten befriedigend mit jenen überein, welche sich beim schonenden Abtrocknen des Wassers bis zur Gewichtskonstanz im Exsiccator über $CaCl_2$ ergaben.

Die Elektrolytbeständigkeit der Dispersionen wurde wie folgt bestimmt:

Zu 25 g in einem Erlenmeyer-Kölbchen befindlichen und mit einem Magnetrührer gut durchmischten Latex wird langsam und tropfenweise aus einer Bürette die betreffende Elektrolytlösung (z.B. 10%ige NaCl-Lösung) hinzugegeben. Mehr als 30 ml der jeweiligen Elektrolytlösung werden nicht hinzugefügt.

Je nach Elektrolytverträglichkeit der jeweiligen Dispersion tritt die Koagulation früher oder später ein. Der Punkt der einsetzenden Koagulation ist in den meisten Fällen gut erkennbar. Als Maß für die Elektrolytbeständigkeit gibt man diejenige ml-Zahl an, bei der die Koagulation einsetzt. Je höher die

Le A 20 284

- 25 -

Zahl der ml, desto höher die Elektrolytbeständig-keit.

Die Mindestfilmbildetemperatur, MFT $\underline{/}^{o}C\underline{\,/}$, wurde gemäß DIN 53 787 bestimmt. Es wurden 90 /u dicke Naßfilme der meist ca. 45%igen Dispersion mit einer Lackhantel aufgetragen. Geschwindigkeit des Luftstromes: 0,6 cm/sec.; Temperatur der eintretenden Luft: 0°C.

Die Viskosität der Dispersionen wurde bei verschiedenen pH-Werten mit Hilfe des Auslaufbechers nach DIN 53 211 gemessen.

Die Gefrierstabilität der Dispersionen wurde wie folgt bestimmt: 50-ml-Schraubdeckelfläschchen aus Polyethylen wurden zu ca. 80 Vol.-% mit Latex gefüllt und in eine Eis-Kochsalzmischung (Temperatur ca. -15°C) getaucht, bis die Dispersion eingefroren und fest erstarrt war. Danach wurde die erstarrte Dispersion bei Zimmertemperatur gelagert und nach ihrem Auftauen auf Koagulatbildung untersucht.

Zur Messung der Tropfenzahl (abgekürzt TRZ) der Dis-persionen diente ein Stalagmometer nach Traube (J. Traube: Liebigs Ann. Chem. 265, 27 (1891) ). Der auf Zimmertemperatur (ca. 22°C) befindliche Latex wurde in einer 1-ml-Vollpipette hochgesaugt und danach mittels einer über einen Dreiwegehahn verbundenen Bremskapillare langsam (ca. 1 Tropfen pro Sek.) abgetropft. Es wurde jene Zahl an Tropfen ermittelt, in welche genau 1 ml der Dispersion zerlegt wird (Tropfenzahl TRZ der Dispersion) .

Le A 20 284

- 26 -

Zum Vergleich wurde stets die Tropfenzahl von 1 ml
reinem Wasser bestimmt (Tropfenzahl TRZ Wasser bzw.
TRZ $H_2O$).

Zur Stalagmometrie vergl. z.B. K.H. Näser "Physikalische Chemie" Leipzig 1969, Seite 340.

Die mittleren Latexteilchendurchmesser wurden mit
der Laser-Korrelations-Spektroskopie bestimmt. Zur
Vereinfachung wird hierfür die Abkürzung LKS gewählt
(Literatur: H.Z. Cummins, E.R. Pike, Hsg. Photon
Correlation and Light Beating Spectroscopy, Plenum
Press 1974; B. Chu, Laser Light Scattering, Acedemic
Press, 1974; D.E. Koppel J. Chem. Phys. 67 (1972)
4814).

Bei dem LKS-Streulichtverfahren wird die Information
über die Streuteilchen (hier: Latexteilchen) aus den
zeitlichen Fluktuationen des Streulichts gewonnen,
welches mit einem Photovervielfacher registriert
wird. Diese Streulicht-Fluktuationen beruhen auf
der irregulären Brownschen Diffusionsbewegung der
Partikel. Entsprechend erhält man aus der Autokorrelationsanalyse des Streulicht-Signals den
translatorischen Diffusionskoeffizient D der Teilchen, welcher mit dem Teilchendurchmesser d verknüpft
ist.

Die mit Hilfe der LKS-Streulichtmessung ermittelten
Durchmesser stimmten mit den aus der Winkelabhängigkeit der Lichtstreuung (vergl. M. Hofmann, H. Krömer,
R. Kuhn Polymeranalytik I, Thieme Taschenlehrbuch
B 4, Georg Thieme Verlag, Stuttgart, 1977, Seite 298)
gemessenen Werten im Bereich von 70 bis 140 nm aus-

Le A 20 284

- 27 -

gezeichnet überein, so daß nur die LKS-Werte angegeben werden.

Die Latexteilchendurchmesserverteilungen wurden mit Hilfe der Elektronenmikroskopie bestimmt. Bei ein und derselben Probe wurden bei der Elektronenmikroskopie in der Regel die Latexteilchen kleiner gefunden (vergl. Tabellen 1 c, 2 b (Fortsetzung), 4 a, 5 b) als nach der LKS. Dies ist naheliegend, weil beide Methoden auf der Messung bzw. Sichtbarmachung anderer Wirkungen beruhen. Dennoch wurde in den meisten Fällen eine sehr gute Übereinstimmung in den Durchmesserverhältnissen der ermittelten Latexteilchen gefunden.

Die elektrische Leitfähigkeit der Dispersionen wird in Millisiemens (mS) angegeben, wobei S (Siemens) die Maßeinheit des elektrischen Leitwertes: 1/Ohm ist. Das benutzte Gerät zeigte die Leitfähigkeit von reinem Kaliumchlorid in verschieden konzentrierten wäßrigen Lösungen wie folgt an: (c = Konzentration in Mol pro Liter):

| c ( Mol / l ) KCl | Leitfähigkeit ( mS ) |
| --- | --- |
| $10^{-3}$ | 0,14 |
| $10^{-2}$ | 1,33 |
| $10^{-1}$ | 12,0 |

Le A 20 284

- 28 -

Zur Bestimmung des _Koagulatanteils_ wurden die Dispersionen erst durch ein Gewebe der quadratischen Maschenweite von 200 $\mu$, danach durch ein Gewebe der quadratischen Maschenweite von 30 $\mu$ filtriert. Es bedeuten:

$K_{200}$ = Koagulatanteil in o/oo, bezogen auf Polymerisat, zur Gewichtskonstanz getrocknet;

$K_{30}$ = Koagulatanteil in o/oo, bezogen auf Polymerisat, zur Gewichtskonstanz getrocknet.

Beim Wert $K_{200}$ sind feste Abscheidungen an Rührern, Stutzen und dergl. mit berücksichtigt.

Der _Grad der Trübung_ ( T ) der aus den Dispersionen mittels einer Lackhantel (Hilfsmittel zur Herstellung von Dispersions-Naßfilmen der Schichtdicke von 30, 60, 90 und 120 $\mu$) in 6 cm breiter Bahn auf 9 x 12 cm große und ca. 3 mm starke, gereinigte (Behandlung der Glasplatten mit Chromschwefelsäure, danach Spülen mit dest. Wasser und Trocknen) Glasplatten aufgezogenen Filme hängt nach deren Trocknung sowohl von den gewählten Naßfilm-Schichtdicken als auch von der Trocknungstemperatur ab.

Daher wird die Beurteilung der Trübung T bzw. des Glanzes der Filme stets unter Berücksichtigung der aufgetragenen Naßfilmschichtdicken als auch unter Nennung der Trocknungstemperaturen vorgenommen.

Die in verschiedenen Naßfilmschichtdicken aufgezogenen Dispersionsfilme wurden entweder 60 Min. lang an freier Luft bei Zimmertemperatur getrocknet, oder sie wurden sofort in einen auf 50°C temperier-

- 29 -

ten geschlossenen Raum (Trockenschrank) gebracht und dort 60 Min. lang getrocknet.

Durch unterschiedliche Luftfeuchtigkeit verfälschte Ergebnisse wurden insofern eliminiert, als alle Vergleichstests gleichzeitig nebeneinander erfolgten.

Die Trübung der aus den Dispersionen gezogenen Filme und ihr Glanz wurde von mehreren Personen beurteilt und danach ein Mittelwert gebildet. Eine große Anzahl der aus den Dispersionen hergestellten Klarfilme wurde im Mikroskop beobachtet und fotografiert. Es bedeuten:

Trübung ( T ) Note: 0 keine Trübung, hoher Glanz
1 keine Trübung, Glanz
2 keine Trübung, noch glänzend
3 schwache Trübung, wenig glänzend
4 deutliche Trübung, nicht-glänzend
5 rauhe Oberfläche, Trübung, kein Glanz.

Die Wasserfestigkeit der Klarfilme ( WF ) ist ebenfalls abhängig von der aufgetragenen Naßfilm-Schichtdicke, sowie von der Trocknungszeit und den Trocknungsbedingungen.

Die in verschiedenen Naßfilm-Schichtdicken aufgezogenen Dispersionsfilme wurden entweder 60 Min. lang frei bei Zimmertemperatur getrocknet, oder sie wurden sofort in einen auf 50°C temperierten geschlossenen Raum (Trockenschrank) gebracht und dort

- 30 -

60 Min. lang getrocknet.

Nach Abkühlen auf ca. 22°C wurde auf die Oberfläche der Filme ein dicker Tropfen Wasser (ca. 0,4 ml) gesetzt und mit einem Glasschälchen abgedeckt.

Das Wasser wirkte 30 Min. auf den Film ein.

Die Benotung der Wasserfestigkeit der mit Wasser belasteten Stelle der Klarfilmoberfläche erfolgte sofort nach dem Abtupfen des Wassers:

a) qualitativ-visuell
   nach dem Grad der Eintrübung des Filmes gegenüber der unbelasteten Filmoberfläche (Noten 1 bis 4),

b) qualitativ-mechanisch
   durch festes Reiben mit der Kuppe des Mittelfingers (Noten A bis D).

Es bedeuten dann: 1 = starkes Weißanlaufen;
                  2 = mittlere Eintrübung;
                  3 = schwache Eintrübung;
                  4 = keine Eintrübung sichtbar;

ferner: A = Filmauflösung beim Reiben;
        B = weitgehende Filmzerstörung beim Reiben;
        C = Erweichung;
        D = feste, zähe Oberfläche, keine Beschädigung.

Note 4 D ist somit die beste; der Film ist dann an der mit Wasser belasteten Stelle nicht eingetrübt und läßt sich auch durch festes Reiben mit dem Finger

Le A 20 284

- 31 -

nicht zerstören.

Entsprechend ist der Film mit der Wasserfestigkeit
1 A nach Wasserbelastung stark eingetrübt und läßt
sich durch Reiben mit der Fingerkuppe zerkrümeln
oder redispergieren.

<u>Le A 20 284</u>

- 32 -

2.  BEISPIELE

Beispiel 1

In einer 4-Ltr.-Polymerisationsapparatur gemäß Erläuterung 1.2 werden (vergl. Tabelle 1.a) die Lösungen oder
Mischungen 1.a.1 bis 1.a.6 zur Herstellung zweier Dispersionen 1-A$_F$ und 1-B$_H$ wie folgt eingesetzt:

Die jeweilige Emulgatorlösung 1.a.1 wird, gemeinsam mit
dem jeweiligen Monomerengemisch 1.a.2, unter Stickstoffatmosphäre im Kolben vorgelegt, im Verlaufe von 30 Min.
gleichmäßig unter Rühren (250 Umdrehungen pro Min.) aufgeheizt, bis eine Temperatur von +70°C im Gemisch erreicht ist.

Der Start der Polymerisation erfolgt in beiden Ansätzen
nach gleichzeitiger Zugabe der Lösungen 1.a.3 und 1.a.4
(Zugabe in je ca. 5 Sek.). Die Polymerisation setzt nach
1 - 2 Min. ein. Sobald, nach ca. 10 Min., ein Keimlatex
entstanden und die Wärmetönung abgeklungen ist, beginnt
die lineare Zudosierung der Gemische 1.a.5 und 1.a.6
innerhalb 6 Stunden.

Zu Beginn der Zuläufe 1.a.5 und 1.a.6 wird die Polymerisationstemperatur, gemessen im Latex, auf 80°C erhöht und
danach 8 Std. lang konstant gehalten. Nach dem Abkühlen
auf Zimmertemperatur werden die Rohdispersionen 1-A$_F$ und
1-B$_H$ charakterisiert (vergl. Tabelle 1 b).

Der Feststoffgehalt der Dispersionen 1-A$_F$ und 1-B$_H$ liegt
bei ca. 45 Gew.-%. Bei quantitativem Monomerenumsatz beträgt der Feststoffgehalt der Dispersionen 45,3 Gew.-%.

Angesichts des hohen Monomerenumsatzes und der günstigen
Copolymerisationsparameter darf die integrale Zusammen-

Le A 20 284

- 33 -

Tabelle 1 a

| Gemisch oder Lösung | Chemikalien: | Gewichtsteile ( g ) | |
|---|---|---|---|
| | | Dispersion 1-A$_F$ | Dispersion 1-B$_H$ |
| 1.a.1 | Entionisiertes Wasser | 1200 | 1200 |
| | Alkalialkanmonosulfo-nat-Emulgator | 2,4 | -- |
| | Polysulfonathaltiger Emulgator mit 70 Gew.-% Natriumalkanpoly-sulfonat (vergl.1.1.1) | -- | 1,0 |
| 1.a.2 | n-Butylacrylat Styrol Methacrylsäure N-Methoximethyl-methacrylamid | 70,3 47,6 6,8 1,1 | 70,3 47,6 6,8 1,1 |
| 1.a.3 | Entionisiertes Wasser Kaliumperoxodisulfat | 75,0 1,6 | 75,0 1,6 |
| 1.a.4 | Entionisiertes Wasser Natriumpyrosulfit | 75,0 0,7 | 75,0 0,7 |
| 1.a.5 | n-Butylacrylat Styrol Methacrylsäure N-Methoximethyl-methacrylamid | 733,1 496,5 70,7 11,9 | 733,1 496,5 70,7 11,9 |
| 1.a.6 | Entionisiertes Wasser Alkalialkanmonosulfo-nat-Emulgator | 402,0 5,0 | 402,0 -- |
| | Polysulfonathaltiger Emulgator mit 70 Gew.-% Natriumalkanpoly-sulfonat (vgl.1.1.1) | -- | 5,0 |
| | Kaliumperoxodisulfat | 3,7 | 3,7 |
| | Summe Chemikalien Gew.-Teile $\lfloor$ g $\rfloor$ | 3203,4 | 3202,0 |

Le A 20 284

Tabelle 1 b

| Dispersion | $1-A_F$ | $1-B_H$ |
|---|---|---|
| Menge $\lceil$ g $\rfloor$ | ca. 3200 | ca. 3200 |
| *$K_{200}$ $\lceil$ o/oo $\rfloor$ | ca. 0,2 | ca. 0,4 |
| *$K_{30}$ $\lceil$ o/oo $\rfloor$ | ca. 0,1 | ca. 0,2 |
| pH-Wert | 2,9 | 2,9 |
| Feststoffgehalt ( % ) | ca. 45 | ca. 45 |
| Auslaufzeit nach DIN 53 211 4-mm-Düse | 18 | 12 |

Erläuterungen zu Tabelle 1 b:

Siehe Text zu Beispiel 1, sowie Abschnitt 1.3.

*) Koagulatanteil

Le A 20 284

- 35 -

setzung des Polymerisats gleichgesetzt werden mit der Zusammensetzung des Monomerengemisches. Die Copolymerisate von 1-A$_F$ und von 1-B$_H$ bestehen demnach aus copolymerisierten Einheiten von:

55,9 Gew.-% n-Butylacrylat

37,8 Gew.-% Styrol

5,4 Gew.-% Methacrylsäure

0,9 Gew.-% N-Methoximethyl-methacrylamid.

Die Dispersionen besitzen in saurer Form eine niedrige Viskosität (Auslaufzeit 12 - 18 sec.) und können praktisch koagulat- und stippenfrei hergestellt werden.

Zur Stabilisierung gegen Scherbeanspruchung und Elektrolytzusätze werden die durch ein 200-/u-Sieb und danach durch durch ein 30-/u-Sieb filtrierten Dispersionen mit ca. 20%igem wäßrigen Ammoniak unter guter Durchmischung auf einen pH-Wert von 8,5 eingestellt. Danach werden, bezogen auf Gesamtgewicht der Dispersion, 1 Gew.-% eines nichtionogenen Emulgators auf Basis eines mit 2,7 Mol Styrol und mit 50 Mol Ethylenoxid kondensierten Phenols, gelöst in soviel Wasser zugesetzt, daß der Feststoffgehalt beider Dispersionen genau 42 Gew.-% beträgt.

Die so erhaltenen Dispersionen werden zur Unterscheidung von den Rohdispersionen mit 1-A$_{Fn}$ und 1-B$_{Hn}$ bezeichnet.

Falls gewünscht, kann sich an die Einstellung der Dispersionen 1-A$_F$ und 1-B$_H$ mit Ammoniak zunächst eine Entgasungsstufe mit Entfernung der Restmonomeren anschließen, wonach erst der Zusatz des nichtionogenen Emulgators erfolgt.

Tabelle 1 c ist zu entnehmen, daß sich die Dispersionen 1-A$_{Fn}$ und 1-B$_{Hn}$ in erster Linie in der Latexteilchengröße unterscheiden. Die feindispersere Dispersion 1-A$_{Fn}$ ist

Le A 20 284

Tabelle 1 c

| Dispersion | $1-A_{Fn}$ | $1-B_{Hn}$ |
|---|---|---|
| Feststoffgehalt $/\,\%\,/$ | 42 | 42 |
| pH-Wert | 8,5 | 8,5 |
| Auslaufzeit im Auslaufbecher, 4 mm $\emptyset$ Düse nach DIN 53211: $/\,sec\,/$ | 19 | 15 |
| Elektrolytbeständigkeit 25 g Dispersion ml 10%ige wäßrige NaCl-Lösung | $>30$ | $>30$ |
| ml 10%ige wäßrige $CaCl_2$-Lösung | $>30$ | $>30$ |
| ml 10%ige wäßrige $Al_2(SO_4)_3$-Lösung | 4,5 | $>30$ |
| Gefrierstabilität | keine Koagulation | keine Koagulation |
| Elektr. Leitfähigkeit Dispersion $/\,mS\,/$ | ca. 3 | ca. 3 |
| Tropfenzahl 1 ml Dispersion | 40 | 36 |
| Tropfenzahl 1 ml Wasser | 23 | 23 |
| Mittlere Filmbildetemperatur (MFT) $/\,^{o}C\,/$ | 15 | 17 |
| Mittlerer Latexteilchendurchmesser $/\,nm\,/$ nach Laser-Korrelationsspektroskopie | ca.110 | ca. 250 |
| Mittlerer Latexteilchendurchmesser $/\,nm\,/$ nach Elektronenmikroskopie | ca. 70 (vgl.Tab.I) | ca. 180 (vgl.Tab.II) |

Erläuterungen zu Tabelle 1 c: vergl. Text zu Abschnitt 1.3 "Beurteilung der Dispersionen", sowie Text zu Beispiel 1.

Le A 20 284

geringfügig viskoser als 1-B$_{Hn}$ (Auslaufzeit 19 anstelle 15 Sek.) und ihre Elektrolytbeständigkeit gegenüber 10%iger wäßriger Aluminiumsulfatlösung ist deutlich geringer (4,5 statt über 30 ml).

In ihrer elektrischen Leitfähigkeit (jeweils ca. 3 mS), ihrer Tropfenzahl (40 und 36 Tropfen pro ml Dispersion), ihrer Filmbildungstemperatur (15 und 17°C), und selbstverständlich ihrem Feststoffgehalt und pH-Wert, welche ja eingestellt wurden, sind die Dispersionen weitgehend miteinander vergleichbar. Beide Dispersionen lassen sich auch einfrieren und beim Auftauen enthält keine Dispersion Koagulat.

Die Dispersionen 1-A$_{Fn}$ und 1-B$_{Hn}$ werden nun in 150 µ-, 90 µ- und 30 µ Naßfilm-Schichtdicken zwecks Prüfung ihrer Klarfilme auf Glanz und Wasserfestigkeit aufgezogen.

Es wird die Trocknung der verschieden dicken Naßfilme sowohl bei Zimmertemperatur als auch bei 50°C im Trockenschrank nach genau 60 Min. abgebrochen.

Die Beurteilung erfolgte, wie in Abschnitt 1.3 ausführlich beschrieben wurde.

Tabelle 1 d zeigt, daß weder die Dispersion 1-A$_{Fn}$ noch die Dispersion 1-B$_{Hn}$ zu klaren, glänzenden Filmen auftrocknet (Noten 3 - 5). Darüberhinaus hat die grobdispersere Dispersion 1-B$_{Hn}$ nach 60 Min. Trocknung bei 22°C noch keinen wasserfesten Film gebildet (Note 1 A, d.h., starke Trübung und Redispergierung).

Mit solchen Dispersionen hergestellte wäßrige Lacke zeigen auch nach Zusatz von Filmbildehilfsmitteln, Emulgatoren und sonstigen Hilfsstoffen im Glanz unbefriedigende

Le A 20 284

_ 38 _

Überzüge.

Es werden nun erfindungsgemäß Abmischungen hergestellt
aus den beiden 42%igen Dispersionen:

1-A$_{Fn}$     mittlerer Dispersionsteilchendurchmesser
ca. 110 nm (nach LKS), und

1-B$_{Hn}$     mittlerer Dispersionsteilchendurchmesser
ca. 250 nm (nach LKS),

die elektronenmikroskopisch ermittelten Teilchendurchmesser entnehme man den Tabellen I und II, Seiten 10 und
11.

Le A 20 284

- 39 -

Tabelle 1 d

| Dispersion | Naßfilm-Schichtdicke $[/u]$ | 30 | 90 | 150 |
|---|---|---|---|---|
| 1-A$_{Fn}$ | Trocknung 22°C Filmtrübung | 4 | 5 | 5 |
| | Trocknung 22°C Wasserfestigkeit | 4 A | 4 D | 4 D |
| | Trocknung 50°C Filmtrübung | 4 | 5 | 5 |
| | Trocknung 50°C Wasserfestigkeit | 4 D | 4 D | 4 D |
| 1-B$_{Hn}$ | Trocknung 22°C Filmtrübung | 3 | 5 | 5 |
| | Trocknung 22°C Wasserfestigkeit | 1 A | 1 A | 1 A |
| | Trocknung 50°C Filmtrübung | 3 | 5 | 5 |
| | Trocknung 50°C Wasserfestigkeit | 3 D | 3 D | 3 D |

Erläuterungen zu Tabelle 1 d: vergl. Text zu Beispiel 1,
sowie Abschnitt 1.3: "Beurteilung der Dispersionen und
daraus hergestellter Klarfilme".

Le A 20 284

Da die Dispersionen 1-A$_{Fn}$ und 1-B$_{Hn}$ den gleichen Feststoffgehalt besitzen, verhalten sich die eingewogenen
Gewichtsteile der Dispersionen wie deren Polymerisatmassen M$_F$ / M$_H$ :

Tabelle 1 e

| Verhältnis Gew.-Tle 42%ige Latices 1-A$_{Fn}$ / 1-B$_{Hn}$ | Verhältnis Polymassen M$_F$ / M$_H$ | Bezeichnung der Mischung 1-A$_{Fn}$ / 1-B$_{Hn}$ |
|---|---|---|
| 25 : 1 | 25 : 1 | a |
| 20 : 1 | 20 : 1 | b |
| 15 : 1 | 15 : 1 | c |
| 10 : 1 | 10 : 1 | d |
| 7 : 1 | 7 : 1 | e |
| 6 : 1 | 6 : 1 | f |
| 5 : 1 | 5 : 1 | g |
| 1 : 1 | 1 : 1 | h |
| 1 : 5 | 1 : 5 | i |
| 1 : 6 | 1 : 6 | j |
| 1 : 7 | 1 : 7 | k |
| 1 : 10 | 1 : 10 | l |
| 1 : 15 | 1 : 15 | m |
| 1 : 20 | 1 : 20 | n |
| 1 : 25 | 1 : 25 | o |

Die Abmischungen a bis o wurden nun in verschiedener Schichtdicke (30, 50 und 150 $\mu$) auf Glasplatten aufgezogen, wobei
zwei Serien a bis o, einmal bei Zimmertemperatur (ca. 22°C)
und einmal im Trockenschrank bei 50°C, je 60 Min. lang, getrocknet wurden. In Tabelle 1 f sind die Ergebnisse der Klarfilmprüfungen zusammengestellt (Benotung vergl. Abschn.1.3).
Le A 20 284

- 41 -

Tabelle 1 f

| Mischungen: jeweils 42%ige Dispersionen $1\text{-}A_{Fn}$ / $1\text{-}B_{Hn}$ | | Trocknung bei 23°C; 56% rel.Luftfeuchte | | | | | | Trocknung bei 50°C | | | | | |
|---|---|---|---|---|---|---|---|---|---|---|---|---|---|
| | | $30_{/u}$ | | $90_{/u}$ | | $150_{/u}$ | | $30_{/u}$ | | $90_{/u}$ | | $150_{/u}$ | |
| Bezeichnung | Verhältnis $M_F/M_H$ | T | WF | T | WF | T | WF | T | WF | T | WF | T | WF |
| a | 25 : 1 | 4 | 3D | 5 | 4D | 5 | 4D | 3 | 4B | 5 | 4D | 5 | 4D |
| b | 20 : 1 | 3 | 3B | 4 | 4D | 4 | 4D | 3 | 4B | 5 | 4D | 5 | 4D |
| c | 15 : 1 | 1 | 3B | 3 | 4D | 3 | 4D | 0 | 4B | 3 | 4D | 3 | 4D |
| d | 10 : 1 | 0 | 4D | 2 | 4D | 2 | 4D | 0 | 4D | 0 | 4D | 1 | 4D |
| e | 7 : 1 | 0 | 4D | 1 | 4D | 1 | 4D | 0 | 4D | 0 | 4D | 0 | 4D |
| f | 6 : 1 | 0 | 4D | 0 | 4D | 0 | 4D | 0 | 4D | 0 | 4D | 0 | 4D |
| g | 5 : 1 | 0 | 3D | 0 | 4D | 0 | 4D | 0 | 3D | 0 | 4D | 0 | 4D |
| h | 1 : 1 | 0 | 3D | 0 | 3D | 0 | 3D | 0 | 3D | 0 | 4D | 0 | 4D |
| i | 1 : 5 | 0 | 1A | 0 | 1A | 0 | 1A | 0 | 3C | 0 | 3D | 0 | 4D |
| j | 1 : 6 | 0 | 1A | 0 | 1A | 0 | 1A | 0 | 3C | 0 | 3D | 0 | 4D |
| k | 1 : 7 | 0 | 1A | 0 | 1A | 0 | 1A | 0 | 3C | 0 | 3D | 0 | 4D |
| l | 1 : 10 | 0 | 1A | 0 | 1A | 0 | 1A | 0 | 3C | 0 | 3D | 0 | 4D |
| m | 1 : 15 | 0 | 1A | 0 | 1A | 0 | 1A | 0 | 3C | 0 | 3D | 0 | 3D |
| n | 1 : 20 | 0 | 1A | 0 | 1A | 0 | 1A | 0 | 3C | 0 | 3D | 0 | 3D |
| o | 1 : 25 | 0 | 1A | 0 | 1A | 0 | 1A | 0 | 3B | 0 | 3D | 0 | 3D |

Erläuterungen zu Tabelle 1 f vergl. Text zu Beispiel 1, sowie Abschnitt 1.3 "Beurteilung der Dispersionen und daraus hergestellte Klarfilme". In Tabelle 1 f bedeuten: T = Trübung; WF = Wasserfestigkeit; O = klarer, glänzender Film; 5 trüber Film; 4D sehr gute Wasserfestigkeit; 1A: schlechte Wasserfestigkeit; Bezeichnungen a bis o siehe Tabelle 1 e.

Le A 20 284

- 42 -

In Tabelle 1 f nimmt die Wasserfestigkeit der Filme (vergl. Spalten WF) mit zunehmendem Gehalt an $M_H$, der grobteiligen Komponente, meist ab. In dünner Schichtdicke (30 $\mu$) macht sich hingegen ein Optimum bei $M_F/M_H$-verhältnissen von 10 : 1 bis 1 : 1 bemerkbar. Bei $M_F/M_H$-verhältnissen 20 : 1 beginnt sich bereits eine Neigung zu besserem Glanz der Klarfilme abzuzeichnen, und ein Optimum liegt im Bereich von 7 : 1 bis 1 : 1 insofern vor, als in diesem Bereich guter Glanz und gute Wasserfestigkeit der Klarfilme gleichzeitig gegeben sind (Note 0 = sehr guter Glanz; Note 4 D: gute Wasserfestigkeit).

Geringste Zusätze der feindispersen Dispersionen 1-$A_{Fn}$ zur grobdisperseren Dispersion 1-$B_{Hn}$ genügen, um letzterer zur Ausbildung hochglänzender Filme zu verhelfen. Wie aus Tabelle 1 f weiterhin hervorgeht, können Filme, welche bei 22°C die Note 1 A in der Wasserfestigkeit erhielten (schlechteste Bewertung) bei etwas erhöhter Temperatur besser verfilmen und zeigen dann eine wesentlich verbesserte Wasserfestigkeit. Es läßt sich auch feststellen, daß Filme aus Dispersionen bei längerem Lagern bei Zimmertemperatur ihre Wasserfestigkeit ganz entscheidend verbessern können.

Demgemäß läßt sich das trübe Auftrocknen der Dispersion 1-$A_{Fn}$ durch Zusatz des an sich ebenfalls trüb auftrocknenden Latex 1-$B_{Hn}$ wirksam beheben. Zusätze von Emulgatoren, von Filmbildehilfsmitteln zu 1-$A_{Fn}$ oder 1-$B_{Hn}$ oder 1-$B_{Hn}$ zeigten sich zur Behebung der Filmtrübungen ungeeignet. Der Zusatz des Emulgators der Dispersion 1-$A_F$ zu 1-$B_H$ oder umgekehrt, der Zusatz des Emulgators von 1-$B_H$ zu 1-$A_F$ zeigte, außer einer Verschlechterung der Film-Wasserfestigkeit, keinen den Glanz verbessernden Effekt.

Le A 20 284

- 43 -

Beispiel 2

In einer 1,5-Ltr.-Polymerisationsapparatur gemäß Abschnitt 1.2 der Erläuterungen werden (siehe Tabelle 2 a) die Lösungen oder Mischungen 2.a.1 bis 2.a.5 zur Herstellung von vier in der Teilchengröße wohlunterschiedenen Dispersionen 2-A bis 2-D wie folgt eingesetzt:

Die jeweilige Emulgatorlösung 2.a.1 wird, gemeinsam mit dem jeweiligen Monomerengemisch 2.a.2, unter Stickstoffatmosphäre und Rühren (300 Umdrehungen pro Min., Glas-Flügel 2 x 5 cm) aufgeheizt, bis 75°C Innentemperatur erreicht sind (Aufheizdauer ca. 30 Min.).

Danach wird die Polymerisation jeweils durch Zugabe der Aktivatorlösungen 2.a.3 jeweils eingeleitet (Zugabe in 5 sec.).

Sobald Keimlatices entstanden und die Polymerisationswärmen abgeklungen sind, werden die Monomerengemische 2.a.4 sowie die Emulgator-Aktivatorlösungen 2.a.5 im Verlauf von 3 Std. zudosiert. Die Innentemperaturen, gemessen im Latex, werden jeweils auf 75°C gehalten.

Nach beendeter Zugabe der Monomerenströme 2.a.4 und der Emulgator-Aktivatorlösungen 2.a.5 wird zur Vervollständigung der Polymerisation noch 3 Std. bei 75°C nachgerührt.

Die in Tabelle 2 a unter 2.a.1 angeführten Emulgatoren unterschiedlichen Gehalts an Mono- und Polysulfonaten sind durch Abmischen der gemäß Abschnitt 1.1 herstellbaren Emulgatoren mit handelsüblichen Natriumalkanmonosulfonat-Emulgatoren gleicher Kohlenstoff-Kettenlänge leicht zugänglich. Bei dem an zweiter Stelle genannten Sulfat eines oxethylierten Alkohols handelt es sich um das Ammoniumsalz des Schwefelsäurehalbesters eines mit 15 Mol Ethylenoxid umgesetzten technischen Laurylalkohols (vergl. Abschnitt 1.1).

Le A 20 284

- 44 -

Nach beendeter Polymerisation und Abkühlen auf 22°C werden die Dispersionen filtriert. Der Koagulatanteil ist sehr gering, der Feststoffgehalt der Dispersionen beträgt jeweils ca. 46 Gew.-% (46,38 Gew.-% ist der maximal erreichbare Wert). Die integrale Zusammensetzung der Polymerisate entspricht somit der Zusammensetzung des Monomerengemisches (vergl. Tabelle 2 a unten). Die noch sauren (pH: ca. 3) ca. 46 Gew.-% Feststoff enthaltenden Dispersionen werden zunächst mit ca. 20 %igem Ammoniakwasser auf pH = 8,5 eingestellt, danach wird, bezogen auf 100 Gew.-Tle 45%igen Latex, 1,07 Gew.-Tle eines nichtionogenen Emulgators auf Basis eines mit 2,7 Mol Styrol und 50 Mol Ethylenoxid kondensierten Phenols und eine berechnete Menge Wasser hinzugefügt, damit ein jeweils genau 45%iger Latex entsteht. Diese 45 Gew.-% Feststoff enthaltenden Dispersionen werden nun wie folgt bezeichnet:

$$2\text{-}A_n \; ; \quad 2\text{-}B_n \; ; \quad 2\text{-}C_n \; ; \quad 2\text{-}D_n.$$

In Tabelle 2b und Tabelle 2b Fortsetzung sind nun die mittleren Latexteilchendurchmesser der Dispersionen $2\text{-}A_n$ bis $2\text{-}D_n$, gemessen mit Hilfe der LKS, sowie insbesondere Latexteilchendurchmesserverteilungen, ermittelt mit Hilfe elektronenmikroskopischer Untersuchungen an $n = 200$ Teilchen, angegeben.

Die unabhängigen Bestimmungsmethoden führen zu etwas unterschiedlichen Werten des mittleren Teilchendurchmessers, wobei allerdings die Durchmesserverhältnisse gut übereinstimmen. Die jeweiligen Dispersionen besitzen ein deutlich ausgeprägtes Teilchendurchmesser-Maximum. Über 70 % der Zahl der gemessenen Teilchen gehören einem Bereich an, der ± 25 % vom mittleren Teilchendurchmesser d beträgt. Bei den Dispersionen $2\text{-}A_n$ und $2\text{-}B_n$, sowie

Le A 20 284

- 45 -

$2-B_n$ und $2-C_n$ kommen Überlappungen vor, indem große Füllkugeln der jeweils feinteiligeren Dispersion dieselbe Größe wie kleine Hauptkugeln der jeweils grobteiligeren Dispersion besitzen. Die mittleren Teilchendurchmesser der Dispersionen unterscheiden sich im Extremfall um einen Faktor von ca. 3 (Kombination $2-A_n$ mit $2-D_n$).

Teile der einzelnen Dispersionen $2-A_n$ bis $2-D_n$ werden nun durch Zugabe von entionisiertem Wasser von einem Feststoffgehalt von jeweils 45 Gew.-% auf Feststoffgehalte von jeweils:

42 ; 40 und 30 Gew.-%

verdünnt.

Von den einzelnen Verdünnungsstufen der Dispersionen werden elektrische Leitfähigkeit, Tropfenzahl, Auslaufzeit im Auslaufbecher nach DIN 53 211 (4 mm, 22°C) bestimmt (siehe Tabelle 2 c).

Von den einzelnen Verdünnungsstufen werden ferner 150 /u Naßfilme auf Glas gezogen und 60 Min. im Trockenschrank bei 50°C getrocknet.

Danach erfolgt die Beurteilung der Klarfilme auf ihren Glanz und ihre Wasserfestigkeit (Beurteilungskriterien vergl. Abschnitt 1.3).

Alle Filme sind an der Oberfläche rauh und durch Oberflächenstrukturen eingetrübt (Benotung 3 bis 5). Die Wasserfestigkeit der Klarfilme nimmt mit steigender Verdünnung naturgemäß ab, da die Schichtdicke sich verringert, welche nach dem Abdunsten des Wassers zurückbleibt. Bei der grobteiligsten Dispersion liegt die schlechteste Wasserfestigkeit vor (Dispersion $2-D_n$).

Le A 20 284

- 46 -

Aus solchen trüb auftrocknenden Dispersionen hergestellte Lacke entwickeln auch bei Mitverwendung von Filmbildehilfsmitteln keinen guten Glanz.

Es werden nun jeweils gleiche Gewichtsteile sich jeweils im Feststoffgehalt entsprechender, sich in ihrer mittleren Latexteilchengröße wohlunterscheidender Dispersionen miteinander vermischt (vergl. Tabellen 2d und 2e).

Es werden Auslaufzeit, elektrische Leitfähigkeit, Tropfenzahl dieser Mischungen bestimmt, und es werden von den einzelnen Abmischungsvarianten und deren verschiedenen Verdünnungsstufen 150 /u starke Naßfilme gezogen und diese 60 Min. lang bei 50°C im Trockenschrank getrocknet. Danach erfolgt deren Beurteilung.

Den Tabellen 2d und 2e ist zu entnehmen:

a) Filme mit gutem Glanz (Note 0) gibt es über einen weiten Feststoffgehaltsbereich (30 - 45 Gew.-%) hinweg nur bei jenen Dispersionsgemischen, deren Hauptkugel/Füllkugel-Verhältnis (Dispersionsteilchendurchmesserverhältnis) $\overline{d}_H$ / $\overline{d}_F$; vergl. letzte zwei Zeilen der Tabellen 2d und 2e, bei 2,8 bis 3,1 (Kombinationen 2-$A_n$ / 2-$D_n$) oder bei 2,2 bis 2,4 (Kombinationen 2-$B_n$ / 2-$D_n$) oder bei 1,9 bis 2,0 (Kombinationen 2-$C_n$ / 2-$D_n$) liegt.

b) Filme mit deutlich verringertem Glanz entstehen aus Dispersionsgemischen, deren Hauptkugel/FüllkugelTeilchendurchmesserverhältnis $\overline{d}_H$ / $\overline{d}_F$, vergl. letzte Zeilen der Tabellen 2d und 2e, bei 1,29 bis 1,3 (Kombination 2-$A_n$ /2-$B_n$) oder bei 1,1 bis 1,2 (Kombination 2-$B_n$ / 2-$C_n$) liegt, oder bei welchen ein

Le A 20 284

- 47 -

Gemisch aus gleichen Teilen von Dispersionen mit
Teilchendurchmesserverhältnissen 1 : 1,3 : 1,5 : 3
(Kombination $2\text{-}A_n$ / $2\text{-}B_n$ / $2\text{-}C_n$ / $2\text{-}D_n$) vorliegt.

c) Filme mit guter Wasserfestigkeit und gutem Glanz
bilden sich bei den unter a) genannten Kombinationen,
wenn der mittlere Teilchendurchmesser der zugrundeliegenden, die Füllkugeln liefernden Abmischkomponente im Bereich unterhalb 135 nm, gemessen nach der
LKS, liegt.

- 48 -

Tabelle 2a

| | Ansatz Bezeichnung | 2-A | 2-B | 2-C | 2-D |
|---|---|---|---|---|---|
| 2.a.1 | Entionisiertes Wasser | 400 | 400 | 400 | 400 |
| | Emulgator Mono/Poly-sulfonat 85:15 Gew.-Tle | 4 | - | - | - |
| | Fettalkohol-15-Ethylen-oxid-Ammoniumsulfat | - | 4 | - | - |
| | Emulgator Mono/Poly-sulfonat 50:50 Gew.-Tle | - | - | 4 | - |
| | Emulgator Mono/Poly-sulfonat 30:70 | - | - | - | 4 |
| 2.a.2 | n-Butylacrylat<br>Styrol<br>Methacrylsäure | 25,5<br>22,5<br>2,0 | 25,5<br>22,5<br>2,0 | 25,5<br>22,5<br>2,0 | 25,5<br>22,5<br>2,0 |
| 2.a.3 | Entionisiertes Wasser<br>Ammoniumperoxodisulfat | 50,0<br>0,7 | 50,0<br>0,7 | 50,0<br>0,7 | 50,0<br>0,7 |
| 2.a.4 | n-Butylacrylat<br>Styrol<br>Methacrylsäure | 229,5<br>202,5<br>18,0 | 229,5<br>202,5<br>18,0 | 229,5<br>202,5<br>18,0 | 229,5<br>202,5<br>18,0 |
| 2.a.5 | Entionisiertes Wasser<br>Ammoniumperoxodisulfat | 140,0<br>2,3 | 140,0<br>2,3 | 140,0<br>2,3 | 140,0<br>2,3 |
| | Emulgator Mono/Poly-sulfonat 85:15 Gew.-Tle | 3,5 | - | - | - |
| | Fettalkohol-30-Ethylen-oxid-Ammoniumsulfat | - | 3,5 | - | - |
| | Emulgator Mono/Poly-sulfonat 50:50 Gew.-Tle | - | - | 3,5 | - |
| | Emulgator Mono/Poly-sulfonat 30:70 | - | - | - | 3,5 |
| | Summe Gew.-Teile (g) | 1100,5 | 1100,5 | 1100,5 | 1100,5 |
| | Monomerenzusammen-setzung (Gew.-%) | n-Butylacrylat: 51<br>Styrol : 45<br>Methacrylsäure: 4<br>Summe Gew.-% : 100 | | | |

- 49 -

Tabelle 2b

Dispersionen gemäß Beispiel 2

| Teilchendurch-messerbereich [nm] | 2-A$_n$ | | 2-B$_n$ | | 2-C$_n$ | | 2-D$_n$ | |
|---|---|---|---|---|---|---|---|---|
| | n | % | n | % | n | % | n | % |
| 40 - 50 | 8 | 4 | - | - | - | - | - | - |
| 50 - 60 | 22 | 11 | - | - | - | - | - | - |
| 60 - 70 | 54 | 27 | - | - | - | - | - | - |
| 70 - 80 | 102 | 51 | 20 | 10 | 2 | 1 | - | - |
| 80 - 90 | 14 | 7 | 80 | 40 | 2 | 1 | - | - |
| 90 - 100 | - | - | 96 | 48 | 22 | 11 | - | - |
| 100 - 110 | - | - | 4 | 2 | 84 | 42 | - | - |
| 110 - 120 | - | - | - | - | 84 | 42 | - | - |
| 120 - 130 | - | - | - | - | 6 | 3 | - | - |
| 130 - 140 | - | - | - | - | - | - | - | - |
| 140 - 150 | - | - | - | - | - | - | - | - |
| 150 - 160 | - | - | - | - | - | - | - | - |
| 160 - 170 | - | - | - | - | - | - | - | - |
| 170 - 180 | - | - | - | - | - | - | - | - |
| 180 - 190 | - | - | - | - | - | - | 2 | 1 |
| 190 - 200 | - | - | - | - | - | - | 4 | 2 |
| 200 - 210 | - | - | - | - | - | - | 44 | 22 |
| 210 - 220 | - | - | - | - | - | - | 90 | 45 |
| 220 - 230 | - | - | - | - | - | - | 44 | 22 |
| 230 - 240 | - | - | - | - | - | - | 10 | 5 |
| 240 - 250 | - | - | - | - | - | - | 4 | 2 |
| 250 - 260 | - | - | - | - | - | - | 2 | 1 |

Erläuterung:

n ist die zu einem bestimmten Teilchendurchmesserbereich [nm] gehörende Teilchenzahl von insgesamt 200 im Durchmesser gemessenen Teilchen; daneben ist deren prozentualer zahlenmäßiger Anteil angegeben; Ermittlung der Durchmesser anhand elektronenmikroskopischer Aufnahmen.

Le A 20 284

- 50 -

Fortsetzung Tabelle 2b

| Dispersionen gemäß Beispiel 2 | $2\text{-}A_n$ | $2\text{-}B_n$ | $2\text{-}C_n$ | $2\text{-}D_n$ |
|---|---|---|---|---|
| Mittlerer Teilchendurchmesser $[nm]$ : | | | | |
| nach Elektronenmikroskopie: | 70 | 90 | 109 | 218 |
| nach LKS: | 92 | 120 | 135 | 260 |
| Teilchendurchmesserverhältnis: | | | | |
| nach Elektronenmikroskopie: | 1 | 1,28 | 1,56 | 3,11 |
| nach LKS: | 1 | 1,30 | 1,47 | 2,83 |
| Bereich $\pm$ 25 % von $\overline{d}$ $[nm]$ (Elektronenmikroskop.) | 52-88 | 67-113 | 82-136 | 163-272 |
| % der Teilchen im Bereich von $\pm$ 25 % von $\overline{d}$ | ca. 95 | ca. 100 | ca. 100 | ca. 100 |

Le A 20 284

| Tabelle 2c | Feststoffgehalt in Gew.-% | | | | Feststoffgehalt in Gew.-% | | | | Feststoffgehalt in Gew.-% | | | | Feststoffgehalt in Gew.-% | | | |
|---|---|---|---|---|---|---|---|---|---|---|---|---|---|---|---|---|
| | 45 | 42 | 40 | 30 | 45 | 42 | 40 | 30 | 45 | 42 | 40 | 30 | 45 | 42 | 40 | 30 |
| Dispersion 2-$A_n$ | x | x | x | x | | | | | | | | | | | | |
| Dispersion 2-$B_n$ | | | | | x | x | x | x | | | | | | | | |
| Dispersion 2-$C_n$ | | | | | | | | | x | x | x | x | | | | |
| Dispersion 2-$D_n$ | | | | | | | | | | | | | x | x | x | x |
| pH-Wert | 8,5 | | | | 8,5 | | | | 8,5 | | | | 8,5 | | | |
| Auslaufzeit im Auslaufbecher 4 ⌀ mm | 17,7 | 15,6 | 13,8 | 11,1 | 13,1 | 12,3 | 11,8 | 10,6 | 13,2 | 12 | 11,6 | 10,8 | 13,2 | 12,2 | 11,9 | 10,9 |
| Leitfähigkeit [mS] | 4,8 | 4,5 | 4,4 | 3,4 | 4,8 | 4,4 | 4,2 | 3,4 | 4,5 | 4,2 | 4 | 3,2 | 5,6 | 5,3 | 5 | 4,2 |
| Tropfenzahl Latex | 39 | 41 | 41 | 43 | 36 | 37 | 35 | 37 | 38 | 39 | 39 | 39 | 41 | 41 | 42 | 42 |
| Tropfenzahl Wasser | 24 | 23 | 23 | 24 | 25 | 23 | 23 | 24 | 25 | 23 | 23 | 24 | 25 | 23 | 23 | 24 |
| Film: 150 $\mu$, naß 50°C, 60 Min. Trübung (Noten 1-5) | 3 | 3 | 4 | 4 | 5 | 5 | 5 | 5 | 5 | 5 | 5 | 5 | 5 | 5 | 5 | 5 |
| Wasserfestigkeit (Note 1 A - 4 D) | 4D | 4D | 3D | 3D | 4D | 3D | 3D | 3D | 4D | 3D | 3D | 2/3D | 1D | 3D | 1D | 1D |
| Mittlere Filmbildetemperatur (°C) | 22 | | | | 22 | | | | 22,5 | | | | 24 | | | |

Erläuterung zu Tabelle 2c: Vergl. Text Beispiel 2, ferner Abschnitt 1.3 "Beurteilung der Dispersionen....". Es wird in Tabelle 2 c die Abhängigkeit der Klarfilmbeschaffenheit vom Feststoffgehalt der Dispersionen aufgezeigt.

Tabelle 2d

| | Feststoffgehalt in Gew.-% | | | | Feststoffgehalt in Gew.-% | | | | Feststoffgehalt in Gew.-% | | | | Feststoffgehalt in Gew.-% | | | |
|---|---|---|---|---|---|---|---|---|---|---|---|---|---|---|---|---|
| | 45 | 42 | 40 | 30 | 45 | 42 | 40 | 30 | 45 | 42 | 40 | 30 | 45 | 42 | 40 | 30 |
| Dispersion 2-A$_n$ | x | x | x | x | x | x | x | x | x | x | x | x | | | | |
| Dispersion 2-B$_n$ | x | x | x | x | | | | | | | | | x | x | x | x |
| Dispersion 2-C$_n$ | | | | | x | x | x | x | | | | | x | x | x | x |
| Dispersion 2-D$_n$ | | | | | | | | | x | x | x | x | | | | |
| pH-Wert | 8,5 | | | | 8,5 | | | | 8,5 | | | | 8,5 | | | |
| Auslaufzeit im Auslaufbecher 4 mm $\emptyset$ | 14,3 | 12,2 | 11,5 | 10,8 | 14,3 | 13,5 | 12 | 10,7 | 13,1 | 12 | 11,6 | 11 | 13,1 | 12 | 11,7 | 10,6 |
| Leitfähigkeit [mS] | 4,8 | 4,4 | 4,3 | 3,4 | 4,6 | 4,3 | 4,2 | 3,3 | 5,2 | 4,8 | 4,7 | 3,8 | 4,6 | 4,3 | 4,1 | 3,3 |
| Tropfenzahl Latex | 40 | 40 | 41 | 41 | 40 | 41 | 42 | 43 | 42 | 41 | 43 | 43 | 36 | 38 | 37 | 38 |
| Tropfenzahl Wasser | 25 | 23 | 23 | 24 | 25 | 23 | 23 | 24 | 25 | 23 | 23 | 24 | 25 | 23 | 23 | 24 |
| Film 150 µ, naß 50°C, 60 Min. Trübung (Noten 1-5) | 3 | 3 | 4 | 4 | 1 | 3 | 4 | 4 | 0 | 0 | 0 | 0 | 1 | 5 | 5 | 4 |
| Wasserfestigkeit (Noten 1A-4D) | 4D | 4D | 3D | 2D | 3D | 3D | 2D | 2D | 3/4D | 3/4D | 3D | 3D | 2/3D | 3D | 1D | 1D |
| $d_H/d_F$: Durchmesserverhältnis Hauptkugeln/Füllkugeln | | | | | | | | | | | | | | | | |
| a) nach LKS | 1,30 | 1,30 | 1,30 | 1,30 | 1,47 | 1,47 | 1,47 | 1,47 | 2,83 | 2,83 | 2,83 | 2,83 | 1,12 | 1,12 | 1,12 | 1,12 |
| b) nach Elektronenmikroskopie | 1,29 | 1,29 | 1,29 | 1,29 | 1,56 | 1,56 | 1,56 | 1,56 | 3,11 | 3,11 | 3,11 | 3,11 | 1,21 | 1,21 | 1,21 | 1,21 |

Tabelle 2e

| | Feststoffgehalt in Gew.-% | | | | Feststoffgehalt in Gew.-% | | | | Feststoffgehalt in Gew.-% | | | |
|---|---|---|---|---|---|---|---|---|---|---|---|---|
| | 45 | 42 | 40 | 30 | 45 | 42 | 40 | 30 | 45 | 42 | 40 | 30 |
| Dispersion 2-A$_n$ | | | | | | | | | x | x | x | x |
| Dispersion 2-B$_n$ | x | x | x | x | | | | | x | x | x | x |
| Dispersion 2-C$_n$ | | | | | x | x | x | x | x | x | x | x |
| Dispersion 2-D$_n$ | x | x | x | x | x | x | x | x | x | x | x | x |
| pH-Wert | 8,5 | | | | 8,5 | | | | 8,5 | | | |
| Auslaufzeit im Auslaufbecher 4 mm ∅ | 13 | 12 | 11,6 | 11 | 12,6 | 11,7 | 11,5 | 10,5 | 13,8 | 11,9 | 11,5 | 10,8 |
| Leitfähigkeit [mS] | 5,2 | 4,8 | 4,6 | 3,8 | 5 | 4,8 | 4,5 | 3,7 | 5,2 | 4,6 | 4,4 | 3,3 |
| Tropfenzahl Latex | 42 | 41 | 43 | 43 | 40 | 41 | 40 | 40 | 41 | 40 | 41 | 42 |
| Tropfenzahl Wasser | 25 | 23 | 23 | 24 | 25 | 23 | 23 | 24 | 25 | 23 | 23 | 24 |
| Film 150 $\mu$, naß 50°C, 60 Min. Trübung (Noten 1-5) | 0 | 0 | 0 | 0 | 0 | 0 | 0 | 0 | 1 | 2/3 | 3 | 2 |
| Wasserfestigkeit Noten 1A - 4D | 3/4D | 3D | 3D | 2D | 3D | 3D | 1D | 1A | 2/3D | 3D | 1/2D | 1A |
| $d_H/d_F$ : Durchmesserverhältnis Hauptkugeln/Füllkugeln | | | | | | | | | | | | |
| a) nach LKS : | 2,17 | 2,17 | 2,17 | 2,17 | 1,93 | 1,93 | 1,93 | 1,93 | — | — | — | — |
| b) nach Elektronenmikroskopie | 2,42 | 2,42 | 2,42 | 2,42 | 2,00 | 2,00 | 2,00 | 2,00 | — | — | — | — |

- 54 -

Beispiel 3

In Anlehnung an Beispiel 1 wurden die in Tabelle 3 a angeführten Dispersionen 1 bis 29 hergestellt.

Die in Tabelle 3 a innerhalb einer Gruppe stehenden Partien (z.B. 1 und 2 in 3-I; 3 und 4 in 3-II, usw.) wurden jeweils nach derselben Vorschrift polymerisiert.

Die unterschiedlichen Latexteilchengrößen von 3-I, 3-II, 3-III, 3-IV und 3-V wurden durch geringfügige Veränderungen in der Konzentration des vorgelegten Emulgators bei der Rezeptur für Dispersion $1-A_F$, Beispiel 1, erzielt, wobei aber die Mengen der jeweils verwendeten Chemikalien konstant blieben.

Gruppe 3-VI betrifft Dispersionen gemäß Beispiel 1 (Dispersion $1-A_F$), die jedoch mit gleichen Mengen eines anderen anionischen Emulgators (Ammoniumsulfat eines mit 3 Mol Ethylenoxid umgesetzten Laurylalkohols) hergestellt wurden.

Gruppe 3-VII betrifft geringfügige, in der Emulgatorvorlage vorgenommene Varianten der Rezeptur Beispiel 1 ($1-B_H$).

Bei allen Versuchen 1 - 29 wurde dasselbe Monomerengemisch zur Polymerisation verwendet, und es wurden die gleichen Polymerisationsbedingungen wie in Beispiel 1 gewählt (gleiche Temperaturführung, Rührung und Zudosierung).

Die Polymerisatausbeute war bei allen Versuchen 1 - 29 praktisch quantitativ, die Rohdispersionen waren ca. 45%ig, und die integrale Polymerisatzusammensetzung besteht daher in allen Fällen aus copolymerisierten Einheiten von:

    55,9 Gew.-% n-Butylacrylat
    37,8 Gew.-% Styrol
    5,4 Gew.-% Methacrylsäure
    0,9 Gew.-% N-Methoximethyl-methacrylamid

Le A 20 284

- 55 -

Die ca. 45 Gew.-% Feststoff enthaltenden Rohdispersionen wurden gemäß Beispiel 1 unter Zugabe von wäßrigem Ammoniak, gleichem, nichtionogenem Emulgator und Wasser auf einen Feststoffgehalt von jeweils 42 Gew.-% eingestellt.

Die Auslaufzeit der so eingestellten Einzelpartien lag, wie gewünscht, unter 25 Sek. im Auslaufbecher nach DIN 53 211, 4-mm-Düse (vergl. Tabelle 3 a, Spalte 3).

Alle 150-$\mu$-Naßfilme trockneten bei Zimmertemperatur (22°C) jedoch trüb, mit rauher Oberfläche, auf, wobei die Wasserfestigkeit der feindispersen Dispersionen besser als jene der grobteiligen Dispersionen war (vergl. Spalten 4 und 5 der Tabelle 3 a).

Die Mischungen 3-I bis 3-VII wurden nun durch Vereinigen gleicher Gewichtsanteile der ihnen zugrundeliegenden 42%igen Einzelpartien hergestellt (z.B. Mischung 3-III durch Vereinigen gleicher Gewichtsteile der 42%igen Partien 5, 6, 7, 8 und 9).

Die mittlere Teilchengröße dieser Abmischungen wurde zur Kontrolle bestimmt (vergl. Spalte 7 der Tabelle 3 a), desgleichen ihre Auslaufzeit (vergl. Spalte 8, Tabelle 3 a), ihre Tropfenzahl im Vergleich zur Tropfenzahl des Wassers (vergl. Spalte 9, Tabelle 3 a), ihre elektrische Leitfähigkeit (Spalte 10, Tabelle 3 a), ihre Beständigkeit gegenüber Zusätzen von 10%iger CaCl$_2$-Lösung (Spalte 11, Tabelle 3 a), sowie ihre mittlere Filmbildungstemperatur (Spalte 12, Tabelle 3 a).

Die Mischungen 3-I bis 3-VII erwiesen sich zudem gefrierstabil, und auch bei wochenlangem Erwärmen auf 50-60°C in geschlossenen Flaschen trat keine Koagulation der Dispersionen ein.

Während sich nun die Mischungen 3-I bis 3-VII von den ihnen zugrundeliegenden Einzelpartien in vielen Punkten äußerlich nicht unterscheiden, so ist doch bemerkenswert,

Le A 20 284

- 56 -

daß die Mischungen 3-VI und 3-VII deutlich bessere Klarfilmeigenschaften zeigen als aufgrund des Verhaltens ihrer zugrundeliegenden Einzeldispersionen zu erwarten war (vergl. Tabelle 3 a, Spalten 4 und 5 mit Spalten 13 und 14, letzte zwei Zeilen).

Ganz entscheidende Verbesserungen in der Filmqualität der Dispersionen wurden aber erst durch die erfindungsgemäße Kombinationen feindisperser mit grobdispersen Dispersionen erzielt.

Tabelle 3 b gibt einen Überblick über die getroffenen Kombinationen der Mischungen 3-I bis 3-VII und über Glanz und Wasserfestigkeit der aus den Abmischungen der Mischungen 3-I bis 3-VI hergestellten, in einer Naßfilmschichtdicke von 150 /u aufgezogenen und sowohl bei 22°C als auch bei 50°C getrockneten Klarfilme.

Zusammengefaßt gilt zur Herstellung von klar, glänzend und gleichzeitig hervorragend wasserfest auftrocknenden Dis-persionen:

1. Je kleiner der mittlere Durchmesser $\overline{d}_F$ der gewählten Latexteilchen-Füllkugeln ist, umso größer muß bei festem $M_F/M_H$ (d.h., Gesamtmasseverhältnis von Füllkugeln zu Hauptkugeln) das Verhältnis $\overline{d}_H/\overline{d}_F$ (d.h., das Durchmesserverhältnis von Haupt- zu Füllkugeln) innerhalb der beanspruchten Grenzen von $\overline{d}_H/\overline{d}_F = 1,35$ bis 3,5 sein.

2. Je größer der Durchmesser $\overline{d}_F$ der gewählten Füllkugeln im angeführten Bereich wird, umso unkritischer werden die Systeme im Hinblick auf die Glanzbildung, umso geringere Mengen an grobteiligen Hauptkugeln müssen anwesend sein, umso geringer wird aber gleichzeitig die Wasserfestigkeit der resultierenden Klarfilme.

Le A 20 284

- 57 -

3. Je kleiner der Durchmesser $\bar{d}_F$ der gewählten Füllkugeln wird, umso kleiner muß der Quotient $M_F/M_H$ innerhalb der beanspruchten Grenzen gewählt werden (d.h., umso größer muß die Anzahl von Hauptkugeln im Gemisch werden).

4. Besonders bevorzugte Systeme besitzen Füllkugeln mit einem nach der LKS gemessenen mittleren Teilchendurchmesser von 105 bis 140 nm (entsprechend ca. 80 bis 130 nm im Elektronenmikroskop), wobei das Verhältnis der Gesamtmassen von Füllkugeln zu Hauptkugeln $M_F/M_H$ im Bereich von 1:1 bis 10:1 liegt und mit zunehmendem Durchmesser $\bar{d}_F$ stark zunimmt.

Es läßt sich schließlich auch zeigen, daß polydisperse Systeme, hergestellt durch Abmischen der Dispersionsgemische 3-I bis 3-VII (vergl. Tabelle 3 c) den erfindungsgemäßen binären Kombinationen unterlegen sind.

Tabelle 3 a

<table>
<tr><td rowspan="3">Ver-such</td><td rowspan="3">Teilchen ∅ LKS [mm]</td><td colspan="3">150 /u NaßFilm; 22°C</td><td rowspan="3">Mischg.</td><td colspan="4">LKS</td><td rowspan="3">Leitfähig-keit [mS]</td><td rowspan="3">10%ig. CaCl₂-Lsg.</td><td rowspan="3">MFT [°C]</td><td colspan="2">Trocknung 22°C</td><td colspan="2">Trocknung 50°C</td></tr>
<tr><td rowspan="2">Ausl'zeit [sec]</td><td rowspan="2">T</td><td rowspan="2">WF</td><td rowspan="2">Teilchen ∅ [mm]</td><td rowspan="2">Ausl'zeit [sec]</td><td colspan="2">TRZ L(HOH)</td><td rowspan="2">T</td><td rowspan="2">WF</td><td rowspan="2">T</td><td rowspan="2">WF</td></tr>
<tr><td colspan="2"></td></tr>
<tr><td>1</td><td>92;91</td><td>17,8</td><td>5</td><td>4D</td><td rowspan="2">3-I</td><td rowspan="2">93; 89</td><td rowspan="2">18,0</td><td rowspan="2" colspan="2">37(23)</td><td rowspan="2">4,1</td><td rowspan="2">>30 ml</td><td rowspan="2">17</td><td rowspan="2">5</td><td rowspan="2">4D</td><td rowspan="2">5</td><td rowspan="2">4D</td></tr>
<tr><td>2</td><td>94;90</td><td>20,7</td><td>3</td><td>4D</td></tr>
<tr><td>3</td><td>96;95</td><td>18,0</td><td>5</td><td>4D</td><td rowspan="2">3-II</td><td rowspan="2">91; 89</td><td rowspan="2">18,1</td><td rowspan="2" colspan="2">39(23)</td><td rowspan="2">3,8</td><td rowspan="2">>30 ml</td><td rowspan="2">18</td><td rowspan="2">4</td><td rowspan="2">4D</td><td rowspan="2">4</td><td rowspan="2">4D</td></tr>
<tr><td>4</td><td>100;98</td><td>18,5</td><td>4</td><td>4D</td></tr>
<tr><td>5</td><td>106;104;102;102</td><td>17,7</td><td>4</td><td>4D</td><td rowspan="5">3-III</td><td rowspan="5">104;102</td><td rowspan="5">15,8</td><td rowspan="5" colspan="2">41(23)</td><td rowspan="5">3,5</td><td rowspan="5">>30 ml</td><td rowspan="5">17</td><td rowspan="5">5</td><td rowspan="5">4D</td><td rowspan="5">5</td><td rowspan="5">4D</td></tr>
<tr><td>6</td><td>106;103;102;104</td><td>15,8</td><td>4</td><td>4D</td></tr>
<tr><td>7</td><td>104;102</td><td>20,1</td><td>4</td><td>4D</td></tr>
<tr><td>8</td><td>104;104</td><td>19,3</td><td>4</td><td>4D</td></tr>
<tr><td>9</td><td>102; 99</td><td>18,8</td><td>5</td><td>4D</td></tr>
<tr><td>10</td><td>111;110</td><td>17,7</td><td>4</td><td>3D</td><td rowspan="8">3-IV</td><td rowspan="8">110;109</td><td rowspan="8">15,8</td><td rowspan="8" colspan="2">41(23)</td><td rowspan="8">3,6</td><td rowspan="8">>30 ml</td><td rowspan="8">18</td><td rowspan="8">5</td><td rowspan="8">4D</td><td rowspan="8">5</td><td rowspan="8">4D</td></tr>
<tr><td>11</td><td>106;108</td><td>15,8</td><td>5</td><td>3/4D</td></tr>
<tr><td>12</td><td>114;106;105</td><td>17,5</td><td>4</td><td>4D</td></tr>
<tr><td>13</td><td>115;111;111</td><td>15,7</td><td>5</td><td>4D</td></tr>
<tr><td>14</td><td>107;108</td><td>15,8</td><td>5</td><td>4D</td></tr>
<tr><td>15</td><td>112;107;106</td><td>19,1</td><td>5</td><td>4D</td></tr>
<tr><td>16</td><td>110;105;106</td><td>18,2</td><td>5</td><td>4D</td></tr>
<tr><td>17</td><td>105;109</td><td>18,3</td><td>5</td><td>4D</td></tr>
<tr><td>18</td><td>118;117</td><td>15,9</td><td>5</td><td>4D</td><td rowspan="4">3-V</td><td rowspan="4">123;120</td><td rowspan="4">14,3</td><td rowspan="4" colspan="2">43(23)</td><td rowspan="4">3,4</td><td rowspan="4">>30 ml</td><td rowspan="4">17</td><td rowspan="4">5</td><td rowspan="4">4D</td><td rowspan="4">5</td><td rowspan="4">4D</td></tr>
<tr><td>19</td><td>119;119</td><td>15,6</td><td>4</td><td>4D</td></tr>
<tr><td>20</td><td>122;118</td><td>14,4</td><td>5</td><td>3D</td></tr>
<tr><td>21</td><td>121;116;117</td><td>16,0</td><td>5</td><td>4D</td></tr>
<tr><td>22</td><td>137;144;137</td><td>15,2</td><td>2</td><td>3D</td><td rowspan="4">3-VI</td><td rowspan="4">139;145</td><td rowspan="4">14,2</td><td rowspan="4" colspan="2">34(23)</td><td rowspan="4">5,5</td><td rowspan="4">>30 ml</td><td rowspan="4">14</td><td rowspan="4">2</td><td rowspan="4">3D</td><td rowspan="4">2</td><td rowspan="4">3/4D</td></tr>
<tr><td>23</td><td>152;156</td><td>14,8</td><td>3</td><td>2/3D</td></tr>
<tr><td>24</td><td>137;140</td><td>14,3</td><td>5</td><td>3D</td></tr>
<tr><td>25</td><td>131;126;127</td><td>14,8</td><td>5</td><td>3D</td></tr>
<tr><td>26</td><td>212;208;204;204</td><td>15,4</td><td>5</td><td>1A</td><td rowspan="4">3-VII</td><td rowspan="4">208;210</td><td rowspan="4">15,2</td><td rowspan="4" colspan="2">36(23)</td><td rowspan="4">3,5</td><td rowspan="4">>30 ml</td><td rowspan="4">18</td><td rowspan="4">2</td><td rowspan="4">1A</td><td rowspan="4">2</td><td rowspan="4">3D</td></tr>
<tr><td>27</td><td>191;196;191;189</td><td>13,5</td><td>5</td><td>1A</td></tr>
<tr><td>28</td><td>218;206;208</td><td>15,4</td><td>5</td><td>1A</td></tr>
<tr><td>29</td><td>236;227;227;239</td><td>18,1</td><td>5</td><td>1A</td></tr>
</table>

Le A 20 284

## Tabelle 3 b

| LKS $d_F$ nm | Kombination | $d_H/d_F$ | Trocknung bei 22°C — Mengenverhältnisse 42%ig. Dispersionen: $M_F/M_F$ 1:1 T | 1:1 WF | 3:1 T | 3:1 WF | 5:1 T | 5:1 WF | 7:1 T | 7:1 WF | 10:1 T | 10:1 WF | 15:1 T | 15:1 WF | Trocknung bei 50°C — Mengenverhältnisse 42%ig. Dispersionen: $M_F/M_F$ 1:1 T | 1:1 WF | 3:1 T | 3:1 WF | 5:1 T | 5:1 WF | 7:1 T | 7:1 WF | 10:1 T | 10:1 WF | 15:1 T | 15:1 WF |
|---|---|---|---|---|---|---|---|---|---|---|---|---|---|---|---|---|---|---|---|---|---|---|---|---|---|---|---|
| ca. 90 | 3-I+3-II | 1,05 | 5 | 4D | | | | | | | | | | | 5 | 4D | | | | | | | | | | |
| | 3-I+3-III | 1,16 | 5 | 4D | | | | | | | | | | | 5 | 4D | | | | | | | | | | |
| | 3-I+3-IV | 1,22 | 5 | 4D | | | | | | | | | | | 5 | 4D | | | | | | | | | | |
| | 3-I+3-V | 1,33 | 5 | 4D | | | | | | | | | | | 5 | 4D | | | | | | | | | | |
| | 3-I+3-VI | 1,55 | 4 | 4D | | | | | | | | | | | 5 | 4D | | | | | | | | | | |
| | 3-I+3-VII | 2,33 | 0 | 4D | 1 | 4D | 2 | 4D | 3 | 4D | 4 | 4D | 5 | 4D | 0 | 4D | 1 | 4D | 2 | 4D | 3 | 4D | 3/4 | 4D | 4 | 4D |
| ca. 95 | 3-II+3-III | 1,10 | 5 | 4D | | | | | | | | | | | 5 | 4D | | | | | | | | | | |
| | 3-II+3-IV | 1,16 | 4 | 4D | | | | | | | | | | | 4 | 4D | | | | | | | | | | |
| | 3-II+3-V | 1,26 | 4 | 4D | | | | | | | | | | | 4 | 4D | | | | | | | | | | |
| | 3-II+3-VI | 1,47 | 3 | 4D | | | | | | | | | | | 3 | 4D | | | | | | | | | | |
| | 3-II+3-VII | 2,21 | 0 | 4D | 1 | 4D | 2 | 4D | 3 | 4D | 4 | 4D | 4 | 4D | 0 | 4D | 0 | 4D | 1 | 4D | 1/2 | 4D | 3 | 4D | 4 | 4D |
| ca. 105 | 3-III+3-IV | 1,05 | 3 | 4D | | | | | | | | | | | | | | | | | | | | | | |
| | 3-III+3-V | 1,14 | 2 | 4D | | | | | | | | | | | | | | | | | | | | | | |
| | 3-III+3-VI | 1,33 | 3 | 4D | | | | | | | | | | | | | | | | | | | | | | |
| | 3-III+3-VII | 2,00 | 0 | 4D | 0 | 4D | 1 | 4D | 2 | 4D | 2 | 4D | 4 | 4D | 0 | 4D | 0 | 3/4D | 0 | 3/4D | 0 | 3/4D | 1 | 4D | 3/4 | 4D |
| ca. 110 | 3-IV+3-V | 1,09 | 3 | 4D | | | | | | | | | | | | | | | | | | | | | | |
| | 3-IV+3-VI | 1,27 | 2 | 3/4D | | | | | | | | | | | | | | | | | | | | | | |
| | 3-IV+3-VII | 1,90 | 0 | 3D | 0 | 4D | 0 | 4D | 0 | 4D | 2/3 | 4D | 3 | 4D | 0 | 4D | 0 | 4D | 0 | 4D | 1 | 4D | 3 | 4D | 3/4 | 4D |
| ca. 120 | 3-V+3-VI | 1,16 | 2 | 4D | | | | | | | | | | | | | | | | | | | | | | |
| | 3-V+3-VII | 1,75 | 0 | 3D | 0 | 3/4D | 0 | 3/4D | 0 | 3/4D | 2/3 | 3/4D | 4 | 4D | 0 | 4D | 0 | 4D | 0 | 4D | 0 | 4D | 2 | 4D | 5 | 4D |
| ca. 140 | 3-VI+3-VII | 1,50 | 0 | 3D | 0 | 3D | 0 | 3D | 0 | 3D | 0 | 3/4D | 0-1 | 3/4D | 0 | 4D | 0 | 3/4D | 0 | 3/4D | 0 | 3/4D | 0 | 3/4D | 0 | 3/4D |

Le A 20 284

Tabelle 3 c

| Kombinationen | Durchmesserverhältnisse der Latexteilchen | Mischungsverhältnisse Gew.-Teile | 150 µ-Naßfilme | | | |
|---|---|---|---|---|---|---|
| | | | Trocknung 22°C | | Trocknung 50°C | |
| | | | T | WF | T | WF |
| 3-I + 3-II + 3-III | 1:1.05:1,16 | 1:1:1 | 3-4 | 4D | 2 | 4D |
| 3-I + 3-II + 3-III + 3-IV | 1:1,05:1,16:1,22 | 1:1:1:1 | 3-4 | 4D | 3-4 | 4D |
| 3-I + 3-II + 3-III + 3-IV + 3-V | 1:1,05:1,16:1,22:1,33 | 1:1:1:1:1 | 3 | 4D | 2 | 4D |
| 3-I + 3-II + 3-III + 3-IV + 3-V + 3-VI | 1:1,05:1,16:1,22:1,33:1,55 | 1:1:1:1:1:1 | 4 | 4D | 3-4 | 4D |
| 3-I + 3-II + 3-III + 3-IV + 3-V + 3-VI + 3-VII | 1:1,05:1,16:1,22:1,33:1,55:2,33 | 1:1:1:1:1:1:1 | 3 | 4D | 1-2 | 3-4D |

- 61 -

Beispiel 4  (Vergleichsbeispiel)

Vier im Handel erhältliche Copolymerisatdispersionen auf der Monomerenbasis n-Butylacrylat/Styrol, deren Herstellungsverfahren und deren genauere Polymerisatzusammensetzung nicht bekannt sind, welche aber ein nahezu identisches Infrarotspektrum besitzen, wurden in ihrer Latexteilchendurchmesserverteilung untersucht (vergl. Tabelle 4 a).

Das Produkt 4-A ist am feinteiligsten, es folgen die Produkte 4-B; 4-C; 4-D.

4-A, 4-B und 4-C sind ca. 50 gew.%ig im Handel und werden als hochwertige Bindemittel für Anstriche eingesetzt. Ihre mittlere Filmbildetemperatur (MFT) liegt bei ca. 20°C. 4-D wird ca. 48%ig geliefert und dient als Textilveredelungshilfsmittel. 4-A, 4-B, 4-C sind relativ viskose Dispersionen, deren Auslaufzeit im Auslaufbecher nach DIN 53 211 nicht meßbar ist. 4-D hingegen ist leicht beweglich (Auslaufzeit ca. 15 sec.) und besitzt eine MFT von ca. 7°C.

Alle vier Dispersionen bilden in der Lieferform klare Filme.

Die vier Dispersionen werden nun jeweils auf:

    a)  45 Gew.-% Feststoffgehalt
    b)  42 Gew.-% Feststoffgehalt
    c)  40 Gew.-% Feststoffgehalt

durch Zugabe von entionisiertem Wasser verdünnt. Danach werden aus den jeweiligen, mit Wasser verdünnten Handelsprodukten Filme in einer Naßfilm-Schichtdicke von:

$$150 \; \mu, \qquad 90 \; \mu \qquad \text{und} \quad 30 \; \mu$$

hergestellt.

Le A 20 284

- 62 -

Die Filme werden sowohl bei Zimmertemperatur (ca. 22°C) als auch bei +50°C jeweils 60 Min. lang getrocknet und danach auf Glanz und Wasserfestigkeit geprüft.

Während aus den konzentrierteren Dispersionen (Feststoffgehalt über 45 Gew.-%) glänzende Filme entstehen, nimmt der Glanz der aus den verdünnten Dispersionen hergestellten Filme stark ab (vergl. Tabelle 4 b).

Am besten verhält sich hierbei in Bezug auf Glanz noch das Produkt 4-D, welches eine breite Latexteilchendurchmesserverteilung besitzt. Es bildet aber weder bei Lufttrocknung noch bei 50°C wasserfeste Filme und ist daher als Bindemittel für Anstrichzwecke ungeeignet.

Beim Vergleich von Tabelle 4 b (Dispersionen des Handels) mit Tabelle 2 d und 2 e und insbesondere mit 1 f, sowie mit 3 b ergibt sich, daß erfindungsgemäße Dispersionen bei gleicher bis wesentlich besserer Wasserfestigkeit Filme mit ganz entscheidend verbessertem Glanz ergeben.

Werden nun 4-A und 4-B oder 4-A und 4-C in 40 - 45 gew.-%ig. Form miteinander abgemischt, so läßt sich nur eine geringfügige Verbesserung des Glanzes der aus den Mischungen hergestellten Filme gegenüber den aus den entsprechend verdünnten Handelsprodukten hergestellten Filmen feststellen.

Werden aber 4-A und 4-D, 4-B und 4-D oder 4-C und 4-D jeweils etwa im Verhältnis 6:1 gemischt und unter Zusatz von Wasser auf Feststoffgehalte von 40 bis 45 Gew.-% verdünnt, so resultieren klare, hochglänzende, in der Wasserfestigkeit gegenüber dem Produkt 4-D ganz wesentlich verbesserte Klarfilme (Trocknung bei 50°C).

Hervorragende Ergebnisse werden erzielt, wenn die Handelsdispersionen 4-A, 4-B und 4-C mit der gemäß Beispiel 1 hergestellten Dispersion 1-B$_H$ n kombiniert werden. Es genügt beispielsweise schon 1 Teil 1-B$_H$ n auf 20 Teile 4-C und

Le A 20 284

- 63 -

die Mischung beider trocknet glänzend auf.

Das vorliegende Beispiel zeigt, daß auch durch Kombination an sich bekannter und gegebener Produkte erfindungsgemäß neue Dispersionen mit einem wesentlich verbesserten Eigenschaftsbild entstehen, welches nicht additiv aus den Eigenschaften der Stammdispersionen ableitbar ist.

Le A 20 284

Tabelle 4 a

| Latexteilchen-durchmesserbereich [nm] | 4-A | | 4-B | | 4-C | | 4-D | |
|---|---|---|---|---|---|---|---|---|
| | n | % | n | % | n | % | n | % |
| 40 - 50 | - | - | .. | - | | - | | - |
| 50 - 60 | 1 | 0,5 | | - | | - | | - |
| 60 - 70 | 1 | 0,5 | | - | | - | | - |
| 70 - 80 | 10 | 5 | | - | | - | | - |
| 80 - 90 | 42 | 21 | 2 | 1 | | - | | - |
| 90 -100 | 80 | 40 | 30 | 15 | 4 | 2 | | - |
| 100 -110 | 44 | 22 | 98 | 49 | 20 | 10 | 1 | 0,5 |
| 110 -120 | 18 | 9 | 66 | 33 | 90 | 45 | 1 | 0,5 |
| 120 -130 | 4 | 2 | 4 | 2 | 76 | 38 | 2 | 1,0 |
| 130 -140 | - | - | | - | 8 | 4 | 2 | 1,0 |
| 140 -150 | - | - | | - | 2 | 1 | 16 | 8,0 |
| 150 -160 | - | - | | - | | - | 34 | 17,0 |
| 160 -170 | - | - | | - | | - | 58 | 29,0 |
| 170 -180 | - | - | | - | | - | 38 | 19,0 |
| 180 -190 | - | - | | - | | - | 20 | 10,0 |
| 190 -200 | - | - | | - | | - | 16 | 8,0 |
| 200 -210 | - | - | | - | | - | 8 | 4,0 |
| 210 -220 | - | - | | - | | - | 2 | 1,0 |
| 220 -230 | - | - | | - | | - | 2 | 1,0 |
| 230 -240 | - | - | | - | | - | | - |
| 240 -250 | - | - | | - | | - | | - |
| 250 -260 | - | - | | - | | - | | - |

Tabelle 4 a: vergl. Text zu Beispiel 4; elektronenmikroskopische Untersuchung von im Handel erhältlichen Acrylat-
Styrol-Copolymerisatdispersionen 3-A bis 3-D. Die Teilchen von 3-A bis 3-C sind wohlgeformte Kugeln, die Gestalt
der Teilchen von Dispersion 3-D ist nicht einheitlich;
n = Anzahl der im Durchmesser bestimmten Teilchen, daneben
ihr Prozentanteil.

Le A 20 284

- 65 -

Fortsetzung von Tabelle 4 a:

| Dispersion, Bezeichnung | 4-A | 4-B | 4-C | 4-D |
|---|---|---|---|---|
| Mittlerer Teilchendurch-messer $\boxed{nm}$ : <br> nach Elektronenmikro-skopie <br> nach LKS | 97 <br><br> 127 | 109 <br><br> 150 | 116 <br><br> 166 | 172 <br><br> 207 |
| Bereich ±25 % von $\overline{d}$ $\boxed{nm}$ (Elektronenmikrosk.) | 73-121 | 82-136 | 87-145 | 129-215 |
| % der Teilchen im Bereich von ±25 % von $\overline{d}$ | ca. 90 | ca. 100 | ca. 100 | ca. 96 |
| Durchmesserverhältnisse nach Elektronenmikrosk. | 1 | 1,12 | 1,19 | 1,77 |
| Durchmesserverhältnisse nach LKS | 1 | 1,18 | 1,31 | 1,62 |

Le A 20 284

Le A 20 284

## Tabelle 4 b

| Feststoff-gehalt (Gew.-%) | Naß-film-dicke [µ] | Filme, getrocknet bei +22°C | | | | | | | | | | | | Filme, getrocknet bei +50°C | | | | | | | | | | | |
|---|---|---|---|---|---|---|---|---|---|---|---|---|---|---|---|---|---|---|---|---|---|---|---|---|---|---|
| | | Dispersionen des Handels | | | | | | | | Kombination nach Erfindung | | | | Dispersionen des Handels | | | | | | | | Kombination nach Erfindung | | | |
| | | 4-A | | 4-B | | 4-C | | 4-D | | 4-A/4-D 6:1 | | 4-A/1-B$_{IIn}$ 6:1 | | 4-A | | 4-B | | 4-C | | 4-D | | 4-A/4-D 6:1 | | 4-A/1-B$_{IIn}$ 6:1 | |
| | | T | WF | T | WF | T | WF | T | WF | T | WF | T | WF | T | WF | T | WF | T | WF | T | WF | T | WF | T | WF |
| 45 | 150 | 3 | 2C | 1 | 1A | 2 | 1A | 2 | 1A | 0 | 1A | 0 | 1A | 3 | 4D | 1 | 4D | 3 | 4D | 2 | 1A | 0 | 4D | 0 | 4D |
| 45 | 90 | 3 | 2A | 1 | 1A | 2 | 1A | 1 | 1A | 0 | 1A | 0 | 1A | 3 | 4D | 1 | 4D | 2 | 4D | 1 | 1A | 0 | 4D | 0 | 4D |
| 45 | 30 | 2 | 1A | 1 | 1A | 2 | 1A | 1 | 1A | 0 | 1A | 0 | 1A | 1 | 4D | 1 | 3C | 1 | 3C | 1 | 1A | 0 | 3D | 0 | 3D |
| 42 | 150 | 3 | 1B | 3 | 1A | 4 | 1A | 2 | 1A | 0 | 1A | 0 | 1A | 5 | 4D | 3 | 4D | 2 | 4D | 1 | 1A | 0 | 4D | 0 | 4D |
| 42 | 90 | 2 | 2A | 3 | 1A | 3 | 1A | 1 | 1A | 0 | 1A | 0 | 1A | 2 | 4D | 2 | 4C | 2 | 4D | 1 | 1A | 0 | 3D | 0 | 4D |
| 42 | 30 | 1 | 1A | 2 | 1A | 2 | 1A | 1 | 1A | 0 | 1A | 0 | 1A | 1 | 3D | 1 | 4C | 2 | 3C | 1 | 1A | 0 | 3D | 0 | 3D |
| 40 | 150 | 3 | 1A | 5 | 1A | 5 | 1A | 2 | 1A | 0 | 1A | 0 | 1A | 4 | 4D | 5 | 3D | 5 | 3D | 2 | 1A | 0 | 4D | 0 | 4D |
| 40 | 90 | 2 | 1A | 5 | 1A | 5 | 1A | 2 | 1A | 0 | 1A | 0 | 1A | 4 | 4D | 4 | 3C | 5 | 4D | 2 | 1A | 0 | 3D | 0 | 4D |
| 40 | 30 | 1 | 1A | 5 | 1A | 5 | 1A | 1 | 1A | 0 | 1A | 0 | 1A | 2 | 3D | 3 | 3C | 4 | 3C | 0 | 1A | 0 | 3D | 0 | 3D |

Beispiel 5

Die in Tabelle 5 a angeführten Lösungen und Mischungen
5.a.1 bis 5.a.6 werden nach dem gleichen Verfahren wie
die Mischungen und Lösungen 1.a.1 bis 1.a.6 des Beispiels 1
(vergl. Tabelle 1 a) polymerisiert.

Die Monomerenzusammensetzung entspricht ebenfalls der des
Beispiels 1. Die integrale Zusammensetzung der Polymerisate entspricht wegen des praktisch quantitativen Monomerenumsatzes der Monomerenzusammensetzung.

Die nach der Polymerisation erhaltenen Rohdispersionen
$5\text{-}A_F$ und $5\text{-}B_H$, Feststoffgehalt je weils ca. 50 Gew.-%,
wurden analog zu Beispiel 1 mit 20%igem Ammoniakwasser
auf pH = 8,5 eingestellt und danach mit 1 Gew.-%, bezogen
auf Polymerisat, eines nichtionogenen Emulgators auf
Basis einer mit 50 Mol Ethylenoxid kondensierten Harzsäure
(Abietinsäure), gelöst in Wasser, versetzt, so daß der
Feststoffgehalt der resultierenden Dispersionen $5\text{-}A_{F\ n}$
und $5\text{-}B_{H\ n}$ bei 47,5 Gew.-% lag.

Die Latexteilchendurchmesserverteilung der Dispersion $5\text{-}A_{F\ n}$
sowie der Dispersion $5\text{-}B_{H\ n}$ ist jeweils der Tabelle 5 b zu
entnehmen. Mischungen gleichen Feststoffgehalts von $5\text{-}A_{F\ n}$
mit $5\text{-}B_{H\ n}$ im Verhältnis

$$5\text{-}A_{F\ n} : 5\text{-}B_{H\ n} = 1 : 1 \text{ bis } 6 : 1$$

trocknen im Bereich von 37-47,5 Gew.-% Feststoffgehalt bei
Raumtemperatur als auch bei 50°C in Naßfilmschichtdicken
von

$$150\,\mu; \quad 90\,\mu; \quad 30\,\mu \quad (\text{Note } 4D)$$

zu glänzenden, klaren und wasserfesten Filmen auf, welche
in ihrem Glanz den Ausgangskomponenten $5\text{-}A_{F\ n}$ und $5\text{-}B_{H\ n}$
stets überlegen sind (Note 0).

Le A 20 284

Die erwähnten Dispersionsmischungen mit einer wohlunterschiedenen Latexteilchendurchmesserverteilung sind hervorragend elektrolyt-stabil, scherstabil, pigmentverträglich,
sowie auch gefrierbeständig.  Sie lassen sich in an sich
bekannter Weise zu Dispersionsfarben mit verbessertem
Glanz verarbeiten.

Le A 20 284

Tabelle 5 a

| Gemisch oder Lösung | Chemikalien | Gewichtsteile ( g ) | |
|---|---|---|---|
| | | 5-A$_F$ | 5-B$_H$ |
| 5.a.1. | Entionisiertes Wasser | 1200 | 1200 |
| | Polysulfonathaltiger Emulgator mit 70 Gew.-% Natriumalkanpolysulfonat (vergl.Abschnitt 1.1.1) | - | 4,0 |
| | Fettalkohol-Ethylenoxid Ammoniumsulfat mit 10 Mol Ethylenoxid (vergl. Abschnitt 1.1.) | 4,0 | - |
| 5.a.2. | n-Butylacrylat<br>Styrol<br>Methacrylsäure<br>N-Methoximethyl-methacrylat | 70,3<br>47,6<br>6,8<br>1,1 | 70,3<br>47,6<br>6,8<br>1,1 |
| 5.a.3 | Entionisiertes Wasser | 75,0 | 75,0 |
| | Kaliumperoxodisulfat | 1,6 | 1,6 |
| 5.a.4. | Entionisiertes Wasser | 75,0 | 75,0 |
| | Natriumpyrosulfit | 0,7 | 0,7 |
| 5.a.5. | n-Butylacrylat<br>Styrol<br>Methacrylsäure<br>N-Methoximethyl-methacrylamid | 899,1<br>608,8<br>86,7<br>14,6 | 899,1<br>608,8<br>86,7<br>14,6 |
| 5.a.6. | Entionisiertes Wasser | 402,0 | 402,0 |
| | Emulgator mit 70 Gew.-% Natriumalkanpolysulfonat (vergl. Abschnitt 1.1.1.) | - | 7,5 |
| | Fettalkohol-Ethylenoxid- Ammoniumsulfat (vergl. Abschnitt 1.1.) | 10,0 | - |
| | Kaliumperoxodisulfat | 3,7 | 3,7 |
| | SUMME Chemikalien Gew.-Teile (g) | 3507,0 | 3504,5 |

Le A 20 284

- 70 -

Tabelle 5 b

| Latexteilchen-durchmesserbereich [nm] | 5-A$_F$ n | | 5-B$_H$ n | |
|---|---|---|---|---|
| | n | % | n | % |
| 60 - 70 | 1 | 0,5 | | |
| 70 - 80 | 18 | 9 | | |
| 80 - 90 | 62 | 31 | | |
| 90 - 100 | 86 | 43 | | |
| 110 - 120 | 28 | 14 | | |
| 120 - 130 | 4 | 2 | 1 | 0,5 |
| 130 - 140 | 1 | 0,5 | 2 | 1,0 |
| 140 - 150 | | | 27 | 13,5 |
| 150 - 160 | | | 90 | 45,0 |
| 160 - 170 | | | 64 | 32,0 |
| 170 - 180 | | | 16 | 8,0 |
| 180 - 190 | | | | |
| 190 - 200 | | | | |
| 200 - 210 | | | | |
| 210 - 220 | | | | |
| Mittlerer Dispersionsteilchen-durchmesser elektronenmikroskopisch ermittelt [nm] | 92 | | 160 | |
| Mittlerer Dispersionsteilchen-durchmesser LKS [nm] | 4 Bestimmungen: 99; 99 98; 97 | | 4 Bestimmungen: 201; 200 193; 198 | |

Le A 20 284

- 71 -

Beispiel 6

Bei den bisherigen Beispielen wurden zur Herstellung erfindungsgemäßer Dispersionen nach gesonderten Verfahren hergestellte feinteilige und grobteilige Dispersionen miteinander abgemischt.

Es ist jedoch auch möglich, Dispersionen mit bimodaler Verteilung nach Eintopfverfahren herzustellen.

Hierbei geht man so vor, daß man zunächst einen grobteiligeren Latex mit geeigneten Emulgatoren oder Dispergatoren herstellt und danach zu diesem weitgehend auspolymerisierten Latex einen Überschuß eines anionischen Emulgators hinzusetzt, welcher die innere Oberfläche des vorgelegten Latex absättigt und darüberhinaus noch neue Mizellen bildet, aus welchen bei weiterer Monomerenzugabe eine neue Generation von Latexteilchen hervorgehen kann.

Geeignete Emulgatoren zur Herstellung des grobteiligeren, die Hauptkugeln bildenden Latex sind beispielsweise Polysulfonate. Es ist jedoch auch möglich, solche grobdispersen Dispersionen nach den bekannten Methoden der "emulgatorfreien Polymerisation" herzustellen.

Vorliegend wurden zunächst (vergl. Tabelle 6 a, Versuche 6-A bis 6-F) die Polysulfonatemulgatorlösungen 6.a.1 und die Monomerengemische 6.a.2 in 4-Ltr.-Polymerisationsapparaturen unter Rühren (250 Umdrehungen pro Min.) und Stickstoffatmosphäre vorgelegt, die Gemische auf +70°C aufgeheizt und nach Zugabe der Initiatorlösungen 6.a.3 2 Stunden bei 70°C polymerisiert. Zu den entstandenen, weitgehend auspolymerisierten Latices wurden nun die Alkanmonosulfonatlösungen 6.a.4 in einem Guß hinzugegeben und nach Einstellung der Temperatur auf 70°C die Monomerengemische 6.a.5 und die Aktivatorlösungen 6.a.6 im Ver-

Le A 20 284

- 72 -

lauf von 2 Stunden zudosiert. Beim Versuch 6-F wurde dem Zulauf 6.a.6 20%iges Ammoniakwasser zugefügt, wodurch eine Teilchenvergröberung erzielt werden sollte.

Es entstanden hierbei ca. 49%ige, praktisch koagulatfreie Dispersionen, welche analog zu Beispiel 1 mit 20%igem Ammoniakwasser auf einen pH-Wert von 8,5 eingestellt und danach mit 1 Gew.-%, bezogen auf Polymerisat, eines nichtionogenen Emulgators auf Basis einer mit 50 Mol Ethylenoxid kondensier ten Harzsäure (Abietinsäure), gelöst in Wasser, versetzt wurden.

Alle Dispersionen trocknen in ca. 48-49%iger Form zu klaren, glänzenden Filmen auf. Nach Verdünnen mit Wasser auf Feststoffgehalte von 45 bis 37 Gew.-% zeigen sich indessen Unterschiede in der Klarfilmbeschaffenheit (vergl. Tabelle 6 b).

Die so hergestellten Dispersionen bestehen nicht aus einheitlichen Latexteilchen; es liegt auch keine breite Teilchendurchmesserverteilung vor; vielmehr bestehen die Dispersionen aus Latexteilchen mit zwei praktisch sich nicht überlappenden Maxima der mittleren Durchmesser für Füllkugeln und Hauptkugeln.

In Tabelle 6 b sind nun die elektronenmikroskopisch bestimmten mittleren Latexteilchendurchmesser $\overline{d}_H$ der großen Teilchen (Hauptkugeln), die mittleren Durchmesser $\overline{d}_F$ der kleineren Latexteilchen (Füllkugeln), sowie das Verhältnis der Teilchenzahlen $n_F : n_H$ für die Dispersionen 6-A bis 6-F angegeben. Das Verhältnis $n_F : n_H$ wurde jeweils durch Auszählen der kleinen und der großen Teilchen auf elektronenmikroskopischen Abbildungen ermittelt. Die Teilchenzahl $n_F + n_H$ lag hierbei meist bei 300 bis 400.

Aus den mittleren Durchmessern und den Teilchenzahlen-

Le A 20 284

- 73 -

verhältnissen läßt sich das Massenverhältnis $M_F : M_H$ berechnen.

Tabelle 6 b zeigt, daß Filme mit gutem Glanz bei Feststoffgehalten von 37 bis 45 Gew.-% erhalten werden, wenn die Füllkugeln größer als 70 nm und die Hauptkugeln größer als 150 nm sind.

Andererseits wird die Wasserfestigkeit der Filme schlecht, wenn die Füllkugeln größer als 150 nm sind (Beispiel 6-$F_n$).

Le A 20 284

- 74 -

Tabelle 6 a

| Lösung, Gemisch | Chemikalien | 6-A | 6-B | 6-C | 6-D | 6-E | 6-F |
|---|---|---|---|---|---|---|---|
| 6.a.1 | Entionisiertes Wasser | 400,00 | 600,00 | 900,00 | 1200,00 | 400,00 | 400,00 |
|  | Emulgator gem. Abschn. 1.1.1 Monosulfonat/Polysulfonat = 30 : 70 Gew.-Tle | 2,00 | 3,00 | 4,50 | 6,00 | 1,00 | 2,00 |
| 6.a.2 | n-Butylacrylat | 121,00 | 181,50 | 272,20 | 363,00 | 121,00 | 121,00 |
|  | Styrol | 81,80 | 122,70 | 184,10 | 245,50 | 81,80 | 81,80 |
|  | Methacrylsäure | 11,70 | 17,60 | 26,30 | 35,10 | 11,70 | 11,70 |
|  | N-Methoximethyl-methacrylamid | 1,95 | 2,92 | 4,38 | 5,84 | 1,95 | 1,95 |
| 6.a.3 | Entionisiertes Wasser | 25,00 | 37,50 | 56,30 | 75,00 | 50,00 | 50,00 |
|  | Ammoniumperoxodisulfat | 0,50 | 0,75 | 1,13 | 1,50 | 1,00 | 1,00 |
| 6.a.4 | 25%ige wäßrige Lösung eines Natriumalkanmonosulfonats | 45,45 | 68,20 | 102,30 | 132,30 | 66,00 | 97,00 |
| 6.a.5 | n-Butylacrylat | 848,90 | 788,40 | 697,50 | 606,90 | 848,90 | 848,90 |
|  | Styrol | 574,00 | 533,10 | 471,70 | 410,00 | 574,00 | 574,00 |
|  | Methacrylsäure | 82,10 | 76,20 | 67,50 | 58,70 | 82,10 | 82,10 |
|  | N-Methoximethyl-methacrylamid | 13,70 | 12,70 | 11,20 | 9,80 | 13,70 | 13,70 |
| 6.a.6 | Entionisiertes Wasser | 1327,00 | 1114,50 | 795,70 | 477,00 | 1256,00 | 1256,00 |
|  | Ammoniumperoxodisulfat | 4,80 | 4,60 | 4,20 | 3,80 | 4,80 | 4,80 |
|  | NH₃-Lösung 20%ig | - | - | - | - | - | 30,00 |
|  | Feststoffgehalt Rohlatex Gew.-% | 49,1 | 48,5 | 48,7 | 48,3 | 49,7 | 48,7 |

Le A 20 284

Tabelle 6 b

| Dispersion | 6-A$_n$ | | 6-B$_n$ | | 6-C$_n$ | | 6-D$_n$ | | 6-E$_n$ | | 6-F$_n$ | |
|---|---|---|---|---|---|---|---|---|---|---|---|---|
| $\overline{d}_H$ (nm) | 186 | | 158 | | 148 | | 135 | | 160 | | 370 | |
| $\overline{d}_F$ (nm) | 126 | | 89 | | 68 | | 49 | | 78 | | 159 | |
| $\overline{d}_H : \overline{d}_F$ | 1,48 | | 1,77 | | 2,18 | | 2,76 | | 2,05 | | 2,33 | |
| $n_F : n_H$ | 1,3 | | 2,5 | | 2;3 | | 1,9 | | 25 | | 5,5 | |
| $M_F : M_H$ | 1 : 2,5 | | 1 : 2,2 | | 1 : 4,5 | | 1 : 11 | | 2,9 : 1 | | 1 : 2,3 | |
| Feststoff-gehalt Gew.-% nach Verdünnen | 150 µ Naßfilme, getrocknet 60 Min. bei 50°C | | | | | | | | | | | |
| | T | WF | T | WF | T | WF | T | WF | T | WF | T | WF |
| 45 | 0 | 4D | 0 | 4D | 1 | 4D | 4 | 4D | 0 | 4D | 0 | 2D |
| 40 | 0 | 3/4D | 0 | 3/4D | 2 | 3D | 5 | 3D | 1 | 4D | 0 | 1A |
| 37 | 0 | 2D | 0 | 3D | 3 | 3D | 5 | 3D | 1 | 3D | 0 | 1A |

Patentansprüche:

1. Wäßrige Dispersionen, enthaltend als Bindemittel mindestens ein filmbildendes Polymerisat aus polymerisierten Einheiten von (Meth)Acrylsäurealkylestern mit 2 - 8 C-Atomen in der Alkoholkomponente oder mindestens ein filmbildendes Polymerisat aus copolymerisierten Einheiten von mindestens einem der vorgenannten (Meth)Acrylsäurealkylester und mindestens einem anderen Vinyl- oder Vinyliden-monomeren oder deren Mischungen, d a d u r c h g e k e n n z e i c h n e t , daß die Dispersionen das Polymerisat in Form von größeren, nicht-agglomerierten, kugelförmigen Teilchen (= Hauptkugeln) und kleineren, nicht-agglomerierten, kugelförmigen Teilchen (= Füllkugeln) enthalten, wobei die kleineren Füllkugeln einen mittleren, elektronenmikroskopisch gemessenen Teilchendurchmesser

$\overline{d}_F$ von 50 bis 150 Nanometer (nm) besitzen, und der mittlere Durchmesser der großen Hauptkugeln, $\overline{d}_H$, um den Faktor 1,35 bis 3,5 größer ist als der mittlere Teilchendurchmesser $\overline{d}_F$, mindestens jedoch 140 nm beträgt, und wobei sich die Gesamtmasse des aus Hauptkugeln bestehenden Polymerisats, $M_H$, zur Gesamtmasse des aus Füllkugeln bestehenden Polymerisats, $M_F$, verhält wie

$$\frac{M_H}{M_F} = 20 : 1 \quad \text{bis} \quad \frac{M_H}{M_F} = 1 : 20$$

und wobei mindestens 70 % der Zahl der Hauptkugeln und mindestens 70 % der Zahl der Füllkugeln im Bereich von ± 25 % des jeweils angegebenen Mittelwertes von $\overline{d}_H$ oder von $\overline{d}_F$ liegen, und daß für den Fall,

Le A 20 284

daß die Dispersion mehrere gleiche oder unterschiedliche Polymerisate bezüglich chemischer und prozentualer Zusammensetzung enthält, diese miteinander
verträglich sind.

2. Wäßrige Dispersionen gemäß Anspruch 1, d a d u r c h
g e k e n n z e i c h n e t, daß der mittlere Teilchendurchmesser $\overline{d}_F$ 80 bis 130 nm ist, der mittlere
Durchmesser $\overline{d}_H$ um den Faktor 1,8 bis 3,5 größer ist
als $\overline{d}_F$ und das Gesamtmassenverhältnis $M_H$ zu $M_F$
1 : 10 bis 2 : 1 beträgt.

3. Wäßrige Dispersionen gemäß den Ansprüchen 1 und 2,
d a d u r c h g e k e n n z e i c h n e t , daß
das filmbildende Polymerisat aus copolymerisierten
Einheiten von n-Butylacrylat, Styrol, Methacrylsäure oder Acrylsäure oder deren Mischungen und
gegebenenfalls N-Methoximethylmethacrylat aufgebaut ist.

4. Wäßrige Dispersionen gemäß Anspruch 3, d a d u r c h
g e k e n n z e i c h n e t , daß das filmbildende
Polymerisat aus copolymerisierten Einheiten von

    48 bis 60 Gew.-% n-Butylacrylat,
    35 bis 48 Gew.-% Styrol,
    4 bis  6 Gew.-% Methacrylsäure oder Acrylsäure
                             oder deren Mischungen, und
    0 bis 15,0 Gew.-% N-Methoximethyl-methacrylamid, die Summe der Gewichtsprozente beträgt 100,

aufgebaut ist.

Le A 20 284

5. Wäßrige Dispersionen gemäß den Ansprüchen 1 bis 4,
d a d u r c h   g e k e n n z e i c h n e t , daß
der Feststoffgehalt an filmbildendem Polymerisat
37 bis 55 Gew.-% beträgt.

6. Wäßrige Dispersion gemäß Anspruch 1, erhältlich
durch inniges Verteilen der Dispersion, die das
Polymerisat in Form der größeren, nicht-agglomerierten, kugelförmigen Teilchen (= Hauptkugeln)
enthält in der Dispersion, die das Polymerisat
in Form der kleineren, nicht-agglomerierten, kugelförmigen Teilchen (= Füllkugeln) im angegebenen
Masseverhältnis gemäß Anspruch 1 enthält und durch
Stabilisieren der erhaltenen Gesamtdispersion nach
ihrer Einstellung auf einen pH-Wert von 7 bis 9
durch Zusatz eines nicht-ionogenen Emulgators in
einer Menge von 0,5 bis 3 Gew.-%, bezogen auf
Polymerisat.

7. Verwendung der wäßrigen Dispersionen gemäß den
Ansprüchen 1 bis 5 als Bindemittel in oder als
wäßrige Anstrich- und Beschichtungsmittel für
Kunststoffe, Metalle, Holz, Glas, Papier und
Kartonagen.

8. Verwendung der wäßrigen Dispersionen gemäß den
Ansprüchen 1 bis 5 als Bindemittel in Straßenmarkierungsfarben.

9. Verwendung der wäßrigen Dispersionen gemäß den Ansprüchen 1 bis 5 als Bindemittel in Druckfarben für
Textilien und Leder.

10. Verwendung der wäßrigen Dispersionen gemäß den Ansprüchen 1 bis 5 als Bindemittel in Imprägnier-

Le A 20 284

- 79 -

oder Verfestigungsmitteln für Papier, gewebte und
nicht-gewebte Textilien und Leder.

Le A 20 284

**0041125**

Nummer der Anmeldung

Europäisches Patentamt

# EUROPÄISCHER RECHERCHENBERICHT

EP 81 10 3082

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CHEMICAL ABSTRACTS, Band 80, Heft 4, 28. Januar 1974, Seite 106, Zusammenfassung 16549y, COLUMBUS, OHIO (US) & JP - A - 73 49 823 (W. SHIMOKAWA et al.), 13. Juli 1973 <br><br> * Insgesamt * <br> --- | 1,3, 5-7 |
| | DE - A - 2 837 992 (WACKER-CHEMIE) (20. März 1980) <br> * Patentanspruch 1; Seite 7, Zeilen 26-29; Seite 23 * <br> --- | 1,2,7-10 |
| A | US - A - 4 046 730 (J.P. TORTAI) <br> * Patentanspruch 1 * <br> & DE - A - 2 542 283 <br> --- | 1 |
| A | DE - A - 2 405 451 (KUREHA KAGAKU KOGYO) <br> * Patentansprüche 1,2; Beispiel 2 * <br> --- | 1,7 |
| P | US - A - 4 254 004 (K.J. ABBEY) (3. März 1981) <br> * Patentansprüche 1,2; Spalte 3, Zeilen 48-66; Spalte 4, Zeilen 55-63 * <br> --- | 1-5 |
| A | LU - A - 29 851 (ETABLISSEMENTS J. DELYS) <br><br> --------- | 7-10 |

### KLASSIFIKATION DER ANMELDUNG (Int. Cl.³)

C 08 J 3/02
C 09 D 3/80
C 09 D 11/10
D 21 H 3/38
D 06 P 1/44

### RECHERCHIERTE SACHGEBIETE (Int. Cl.³)

C 08 J 3/02
C 08 F 2/16
C 08 F 2/22
C 09 D 3/80
D 21 H 3/38

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde fur alle Patentansprüche erstellt.

| Recherchenort | Abschlußdatum der Recherche | Prufer |
|---|---|---|
| Den Haag | 16.09.1981 | HALLEMEESCH |

EPA form 1503.1   06.78